(19) Europäisches Patentamt
European Patent Office
Office européen des brevets

(11) **EP 4 521 704 A1**

(12) **EUROPEAN PATENT APPLICATION**

(43) Date of publication:
**12.03.2025 Bulletin 2025/11**

(21) Application number: **24199542.2**

(22) Date of filing: **10.09.2024**

(51) International Patent Classification (IPC):
*H04L 45/122* (2022.01)   *H04L 45/12* (2022.01)
*H04L 45/24* (2022.01)   *H04L 47/125* (2022.01)

(52) Cooperative Patent Classification (CPC):
**H04L 45/24; H04L 45/122; H04L 45/123;**
**H04L 45/124; H04L 47/125**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **11.09.2023 IN 202341060922**
**03.09.2024 US 202418823384**

(71) Applicant: **Juniper Networks, Inc.**
**Sunnyvale, CA 94089 (US)**

(72) Inventors:
• **KOMMULA, Raja**
**Sunnyvale, 94089 (US)**
• **SATYANARAYANA, Vyasraj**
**Sunnyvale, 94089 (US)**
• **SUNKADA, Ganesh Byagoti Matad**
**Sunnyvale, 94089 (US)**

(74) Representative: **D Young & Co LLP**
**3 Noble Street**
**London EC2V 7BQ (GB)**

(54) **ENERGY AWARE WEIGHTED ECMP**

(57)    Techniques are described for classifying packet flows to different paths of a computer network based at least in part on an energy cost of each of the different paths. In one example, a network device determines a weighted equal-cost multipath (wECMP) cost of each of different paths over which to forward packets. The different paths may include, for example, different interfaces of a network device, different links to which the network device is connected, or different links of an aggregated bundle of Ethernet links. The network device determines an energy cost of each of the paths. The network device modifies the wECMP cost of each path based at least in part on the energy cost of the path to obtain a modified wECMP cost. The network device load balances the packets over the paths in accordance with the modified wECMP cost.

FIG. 1

**Description**

This application claims the benefit of U.S. Patent Application No. 18/823,384 filed September 03, 2024, which claims the benefit of India Provisional Patent Application No. 202341060922, filed September 11, 2023, the entire contents of each of which are incorporated herein by reference.

**TECHNICAL FIELD**

This disclosure relates to computer networks and, more specifically, to improving energy efficiency in computer networks.

**BACKGROUND**

A computer network is a collection of interconnected network devices that can exchange data and share resources. In a packet-based network, such as an Ethernet network, the network devices communicate data by dividing the data into variable-length blocks called packets, which are individually routed across the network from a source device to a destination device. The destination device extracts the data from the packets and assembles the data into its original form.

Certain devices (i.e., nodes), such as routers, maintain routing information that describes routes through the network. A "route" can generally be defined as a path between two locations on the network. Upon receiving an incoming packet, the router examines keying information within the packet to identify the destination for the packet. Based on the destination, the router forwards the packet in accordance with the routing information.

In a typical cloud data center environment, there is a large collection of interconnected routers and servers that provide computing and/or storage capacity to run various applications. For example, a data center may comprise a facility that hosts applications and services for subscribers, i.e., customers of data center. The data center may, for example, host all of the infrastructure equipment, such as networking and storage systems, redundant power supplies, and environmental controls. In a typical data center, clusters of storage servers and application servers (compute nodes) are interconnected via high-speed switch fabric provided by one or more tiers of physical network switches and routers. More sophisticated data centers provide infrastructure spread throughout the world with subscriber support equipment located in various physical hosting facilities.

As data centers become larger, energy usage by the data centers increases. Some large data centers require a significant amount of power (e.g., around 100 megawatts), which is enough to power many homes (e.g., around 80,000). Data centers may also run application workloads that are compute and data intensive, such as crypto mining and machine learning applications, and consume a significant amount of energy. Customers of data centers and data center providers themselves are pushing for more energy efficient data centers and/or applications. To be more energy efficient, conventional data centers may source some of its energy from renewable energy sources. However, the configuration of data centers and/or the applications that run on the data centers are constantly changing and these conventional data centers are unable to dynamically increase its energy efficiency.

**SUMMARY**

In general, techniques are described for classifying packet flows to different paths of a computer network based at least in part on an energy cost of each path of the plurality of different paths. In one example, a network device determines a weighted equal-cost multipath (wECMP) cost of each of different paths over which to forward packets. The different paths may include, for example, different interfaces of a network device, different links to which the network device is connected, or different links of an aggregated bundle of Ethernet links.

The network device determines an energy cost of each of the paths. In some examples, the network device may compute the energy cost based on a number of hops of each path. In some examples, the network device may compute the energy cost based on a geographic distance of each path. In other examples, the network device may compute the energy cost by computing a green-BitCost metric for each path, which is representative of the energy cost of each path. The green-BitCost metric may be computed, for example, based at least in part on physical parameters of each path, such as a distance, speed, or optics-type of each path, device characteristics of one or more network devices implementing the path, such as a model of the network device or a type of one or more components of the network device, or a Watt-per-bit cost of the path. The network device modifies the wECMP cost of each path based at least in part on the energy cost of the path to obtain a modified wECMP cost. The network device load balances the packets over the paths in accordance with the modified wECMP cost.

In some examples, the techniques of the disclosure may apply different network policies based on utilization rates of the computer network. For example, a computer system as described herein may apply, during an "off-peak" or low-usage time of a computer network, a first network policy that takes into account the energy cost of each path when classifying packet flows to respective paths. Further, the computer system may apply, during a "peak" or high-usage time of the computer network, a second network policy that applies a shortest-path or equal-cost algorithm to classify packet flows to respective paths without taking into account the energy cost of each path. In this fashion, the computer system may maximize energy-saving techniques while network congestion is not an important factor, and maximize network throughput when network congestion is adversely affecting the computer network.

The techniques of the disclosure may provide specific improvements to the computer-related field of computer networking that have one or more practical applications. For example, the techniques disclosed herein may modify the use of ECMP or wECMP techniques for assigning packet flows to network paths to take into consideration the energy usage of each path. Therefore, the techniques of the disclosure may substantially reduce the energy cost of forwarding network traffic, without adversely impacting the load-balancing of such network traffic across the network. Such techniques may reduce the energy usage of computer networks, reduce the environmental impact of computer networks, and reduce the cost of infrastructure used to power such computer networks.

In one example, the techniques describe a network device comprising: processing circuitry in communication with storage media and configured to: determine a weighted equal-cost multipath (wECMP) cost of each of a plurality of paths over which to forward packets of a plurality of packet flows; determine an energy cost of each of the plurality of paths; modify the wECMP cost of each path of the plurality of paths based at least in part on the energy cost of the corresponding path of the plurality of paths to obtain a modified wECMP cost; and load balance the plurality of packets over the plurality of paths in accordance with the modified wECMP cost.

In another example, the techniques describe a method comprising: determining, by a network device, a weighted equal-cost multipath (wECMP) cost of each of a plurality of paths over which to forward packets of a plurality of packet flows; determining, by the network device, an energy cost of each of the plurality of paths; modifying, by the network device, the wECMP cost of each path of the plurality of paths based at least in part on the energy cost of the corresponding path of the plurality of paths to obtain a modified wECMP cost; and load balancing, by the network device, the plurality of packets over the plurality of paths in accordance with the modified wECMP cost.

In another example, the techniques describe, computer-readable media comprising (e.g. storing and/or conveying) instructions that, when executed, are configured to cause processing circuitry to: determine a weighted equal-cost multipath (wECMP) cost of each of a plurality of paths over which to forward packets of a plurality of packet flows; determine an energy cost of each of the plurality of paths; modify the wECMP cost of each path of the plurality of paths based at least in part on the energy cost of the corresponding path of the plurality of paths to obtain a modified wECMP cost; and load balance the plurality of packets over the plurality of paths in accordance with the modified wECMP cost.

The details of one or more examples of this disclosure are set forth in the accompanying drawings and the description below. Other features, objects, and advantages will be apparent from the description and drawings, and from the claims.

**BRIEF DESCRIPTION OF DRAWINGS**

FIG. 1 is a block diagram illustrating an example network system having a data center in which examples of the techniques described herein may be implemented.

FIG. 2 is a block diagram illustrating an example computing device that uses a network interface card having a separate processing unit, with which examples of the techniques described herein may be performed.

FIG. 3 is a conceptual diagram illustrating a data center with servers that each include a network interface card having a separate processing unit, controlled by an edge services platform.

FIG. 4 is a diagram illustrating an example data center having a server connected by a switch fabric, with NICs forming independent NIC fabrics.

FIG. 5 is a flow chart of an example operation of edge services controller to provide self-learning green networks.

FIG. 6 is a flow chart of another example operation of edge services controller to provide self-learning application workloads.

FIG. 7 is a block diagram of an example network system in accordance with the techniques of the disclosure.

FIG. 8 is a block diagram of an example aggregated bundle of links in accordance with the techniques of the disclosure.

FIG. 9 is a block diagram of an example network system that performs routing of network traffic according to conventional ECMP techniques.

FIG. 10 is a block diagram of an example network system that performs routing of network traffic according to energy-aware ECMP routing using hop-count, in accordance with the techniques of the disclosure.

FIG. 11 is a block diagram of an example network device that performs routing of network traffic according to energy-aware ECMP routing using hop-count, in accordance with the techniques of the disclosure.

FIG. 12 is a block diagram of an example network device that performs routing of network traffic according to energy-aware ECMP routing using green-BitCost, in accordance with the techniques of the disclosure.

FIG. 13 is a block diagram of an example computing device in accordance with the techniques of the disclosure.

FIG. 14 is a flowchart illustrating an example operation in accordance with the techniques of the disclosure.

Like reference characters denote like elements throughout the description and figures.

## DETAILED DESCRIPTION

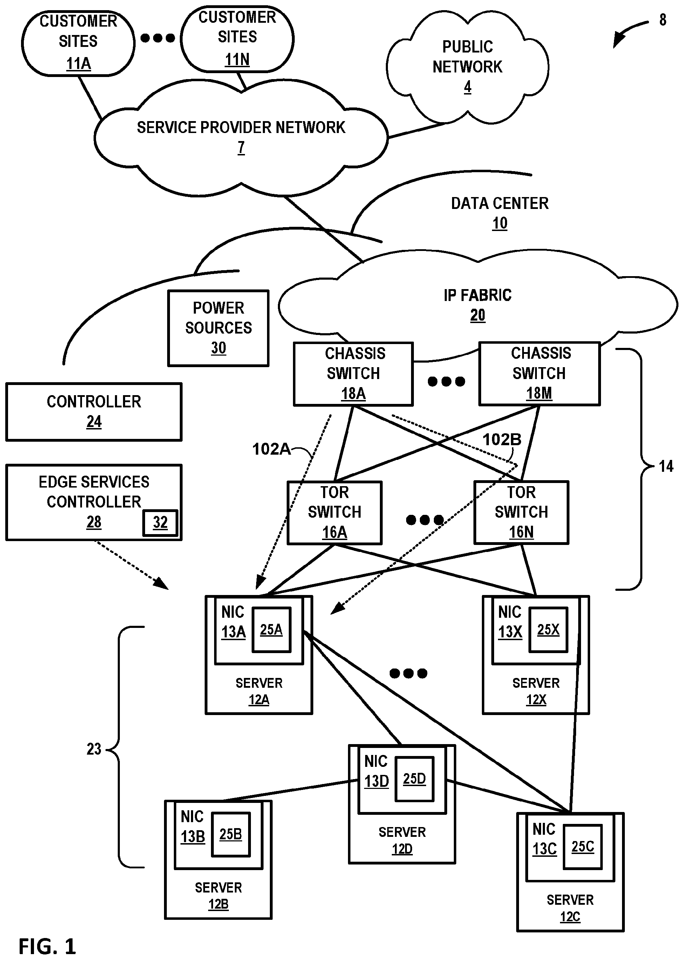

FIG. 1 is a block diagram illustrating an example system 8 having computing infrastructure in which examples of the techniques described herein may be implemented. In general, data center 10 provides an operating environment for applications and services for one or more customer sites 11A-11N (collectively referred to herein as "customer sites 11" or "customers 11") having one or more customer networks coupled to the data center by service provider network 7. Data center 10 may, for example, host infrastructure equipment, such as networking and storage systems, redundant power supplies, and environmental controls. Service provider network 7 is coupled to public network 4, which may represent one or more networks administered by other providers, and may thus form part of a large-scale public network infrastructure, e.g., the Internet. Public network 4 may represent, for instance, a local area network (LAN), a wide area network (WAN), the Internet, a virtual LAN (VLAN), an enterprise LAN, a layer 3 virtual private network (VPN), an Internet Protocol (IP) intranet operated by the service provider that operates service provider network 7, an enterprise IP network, or some combination thereof.

Although customer sites 11 and public network 4 are illustrated and described primarily as edge networks of service provider network 7, in some examples, one or more of customer sites 11 and public network 4 may be tenant networks within data center 10 or another data center. For example, data center 10 may host multiple tenants (customers) each associated with one or more virtual private networks (VPNs), each of which may implement one of customer sites 11.

Service provider network 7 offers packet-based connectivity to attached customer sites 11, data center 10, and public network 4. Service provider network 7 may represent a network that is owned and operated by a service provider to interconnect a plurality of networks. Service provider network 7 may implement Multi-Protocol Label Switching (MPLS) forwarding and in such instances may be referred to as an MPLS network or MPLS backbone. In some instances, service provider network 7 represents a plurality of interconnected autonomous systems, such as the Internet, that offers services from one or more service providers.

In some examples, data center 10 may represent one of many geographically distributed network data centers. As illustrated in the example of FIG. 1, data center 10 may be a facility that provides network services for customers. A customer of the service provider may be a collective entity such as enterprises and governments or individuals. For example, a network data center may host web services for several enterprises and end users. Other example services may include data storage, virtual private networks, traffic engineering, file service, data mining, scientific- or super- computing, and so on. Although illustrated as a separate edge network of service provider network 7, elements of data center 10 such as one or more physical network functions (PNFs) or virtualized network functions (VNFs) may be included within the service provider network 7 core.

In this example, data center 10 includes storage and/or compute servers interconnected via switch fabric 14 provided by one or more tiers of physical network switches and routers, with servers 12A-12X (herein, "servers 12") depicted as coupled to top-of-rack (TOR) switches 16A-16N. Servers 12 may also be referred to herein as "hosts" or "host devices." Data center 10 may include many additional servers coupled to other TOR switches 16 of the data center 10.

Switch fabric 14 in the illustrated example includes interconnected top-of-rack (or other "leaf') switches 16A-16N (collectively, "TOR switches 16") coupled to a distribution layer of chassis (or "spine" or "core") switches 18A-18M (collectively, "chassis switches 18"). Although not shown, data center 10 may also include, for example, one or more non-edge switches, routers, hubs, gateways, security devices such as firewalls, intrusion detection, and/or intrusion prevention devices, servers, computer terminals, laptops, printers, databases, wireless mobile devices such as cellular phones or personal digital assistants, wireless access points, bridges, cable modems, application accelerators, or other network devices.

In this example, TOR switches 16 and chassis switches 18 provide servers 12 with redundant (multihomed) connectivity to IP fabric 20 and service provider network 7. Chassis switches 18 aggregate traffic flows and provides connectivity between TOR switches 16. TOR switches 16 may be network devices that provide layer 2 (MAC) and/or layer 3 (e.g., IP) routing and/or switching functionality. TOR switches 16 and chassis switches 18 may each include one or more processors and a memory and can execute one or more software processes. Chassis switches 18 are coupled to IP fabric 20, which may perform layer 3 routing to route network traffic between data center 10 and customer sites 11 by service provider network 7. The switching architecture of data center 10 is merely an example. Other switching architectures may have more or fewer switching layers, for instance.

Each of servers 12 may be a compute node, an application server, a storage server, or other type of server. For example, each of servers 12 may represent a computing device, such as an x86 processor-based server, configured to operate according to techniques described herein. Servers 12 may provide Network Function Virtualization Infrastructure (NFVI) for an NFV architecture.

Servers 12 host endpoints for one or more virtual networks that operate over the physical network represented here by IP fabric 20 and switch fabric 14. Although described primarily with respect to a data center-based switching network, other physical networks, such as service provider network 7, may underlay the one or more virtual networks.

Servers 12 each includes at least one network interface card (NIC) of NICs 13A-13X (collectively, "NICs 13"), which each include at least one port with which to exchange packets send and receive packets over a communication link. For example, server 12A includes NIC 13A. NICs 13 provide connectivity between the server and the switch fabric. In some examples, NIC 13 includes an additional processing unit in the NIC itself to offload at least some of the processing from the host CPU (e.g., the CPU of the server that includes the NIC) to the NIC, such as for performing policing and other advanced functionality, known as the "datapath."

In some examples, each of NICs 13 provides one or more virtual hardware components for virtualized input/output (I/O). A virtual hardware component for I/O may be a virtualization of a physical NIC 13 (the "physical function"). For example, in Single Root I/O Virtualization (SR-IOV), which is described in the Peripheral Component Interface Special Interest Group SR-IOV specification, the PCIe Physical Function of the network interface card (or "network adapter") is virtualized to present one or more virtual network interface cards as "virtual functions" for use by respective endpoints executing on the server 12. In this way, the virtual network endpoints may share the same PCIe physical hardware resources and the virtual functions are examples of virtual hardware components. As another example, one or more servers 12 may implement Virtio, a para-virtualization framework available, e.g., for the Linux Operating System, that provides emulated NIC functionality as a type of virtual hardware component. As another example, one or more servers 12 may implement Open vSwitch to perform distributed virtual multilayer switching between one or more virtual NICs (vNICs) for hosted virtual machines, where such vNICs may also represent a type of virtual hardware component. In some instances, the virtual hardware components are virtual I/O (e.g., NIC) components. In some instances, the virtual hardware components are SR-IOV virtual functions and may provide SR-IOV with Data Plane Development Kit (DPDK)-based direct process user space access.

In some examples, including the illustrated example of FIG. 1, one or more of NICs 13 may include multiple ports. NICs 13 may be connected to one another via ports of NICs 13 and communications links to form a NIC fabric 23 having a NIC fabric topology. NIC fabric 23 is the collection of NICs 13 connected to at least one other NIC 13.

NICs 13 each includes a processing unit to offload aspects of the datapath. The processing unit in the NIC may be, e.g., a multi-core ARM processor with hardware acceleration provided by a Data Processing Unit (DPU), Field Programmable Gate Array (FPGA), and/or an ASIC. NICs 13 may alternatively be referred to as SmartNICs or GeniusNICs.

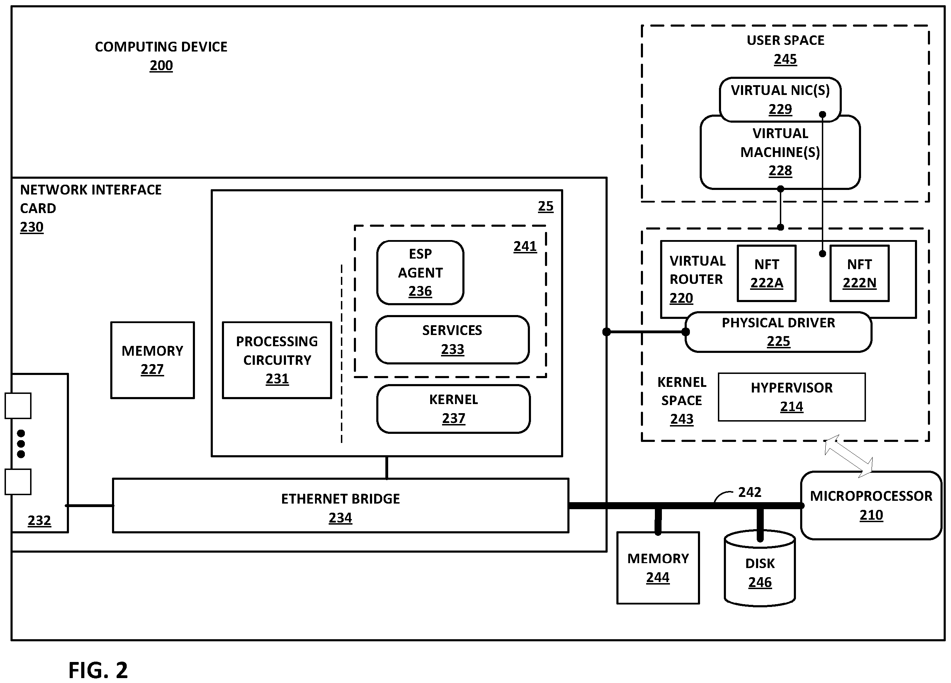

Edge services controller 28 may manage the operations of the edge services platform within NIC 13s in part by orchestrating services (e.g., services 233 as shown in FIG. 2) to be performed by processing units 25; API driven deployment of services 233 on NICs 13; NIC 13 addition, deletion and replacement within the edge services platform; monitoring of services 233 and other resources on NICs 13; and management of connectivity between various services 233 running on the NICs 13.

Edge services controller 28 may communicate information describing services available on NICs 13, a topology of NIC fabric 13, or other information about the edge services platform to an orchestration system (not shown) or network controller 24. Example orchestration systems include OpenStack, vCenter by VMWARE, or System Center by MICROSOFT. Example network controllers 24 include a controller for Contrail by JUNIPER NETWORKS or Tungsten Fabric. Additional information regarding a controller 24 operating in conjunction with other devices of data center 10 or other software-defined network is found in International Application Number PCT/US2013/044378, filed June 5, 2013, and entitled "PHYSICAL PATH DETERMINATION FOR VIRTUAL NETWORK PACKET FLOWS;" and in U.S. Patent Application No. 14/226,509, filed March 26, 2014, and entitled "Tunneled Packet Aggregation for Virtual Networks," each of which is incorporated by reference as if fully set forth herein.

In some examples, an edge services platform determines the energy efficiency of data center 10 and/or the energy efficiency of data center 10 when deploying an application workload, and may invoke one or more actions to improve energy efficiency of data center 10. In some examples, edge services controller 28 determines the energy efficiency of data center 10 and leverages processing units 25 of NICs 13 to augment the processing and network functionality of switch fabric 14 and/or servers 12 that include NICs 13 to improve energy efficiency of data center 10.

As one example, edge services controller 28 may include an energy efficiency module 32 configured to determine the energy efficiency of the data center, referred to herein as a green quotient of a data center ($GQ_{dc}$), based on energy usage of data center 10 in relation to a percentage of energy provided by one or more renewable energy sources to the data center (g) (also referred to herein as "green energy sources") such as solar, wind, hydroelectric, etc. In the example of FIG. 1, data center 10 may obtain energy from one or more power sources 30 for data center 10. Power sources 30 may include renewable energy sources, non-renewable energy sources, or a combination of renewable and non-renewable energy sources. Energy efficiency module 32 obtains telemetry data, including energy usage data of data center 10, which includes current energy usage ($E_C$) of data center 10 and total energy usage ($E_T$) of data center 10 if the data center is running at full capacity (e.g., determined from manufacturer provided information). Current energy usage data may include, for example, an amount of power currently used by one or more devices within the data center or other metric indicating energy currently being consumed. The total energy usage of data center 10 may indicate the maximum amount of power that can be used by the one or more devices if operating at maximum capacity. Energy efficiency module 32 may obtain energy usage data of data center 10 directly from servers 12 and/or network devices (e.g., chassis switches 18 and TOR switches 16) of data center 10, from a centralized controller that collects energy usage data from servers 12 and/or network devices of the data center, and/or from static information provided by manufacturers of the servers and/or network devices (e.g., maximum capacity of servers and/or compute nodes).

Energy efficiency module 32 determines a percentage of the total energy usage ($E_T$) consumed by the current energy usage ($E_C$) of data center 10, referred to herein as "energy quotient" ($E_Q$) of the data center, such as the following example below:

$$E_Q = \frac{E_C}{E_T} * 100$$

Energy efficiency module 32 compares the energy quotient ($E_Q$) of data center 10 with the percentage of energy provided by one or more renewable energy sources to the data center 10 (g) (referred to herein as "green energy percentage" of the data center). As an example of green energy percentage, if power sources 30 includes 20% renewable energy sources and 80% are non-renewable energy sources, the percentage of energy provided by one or more renewable energy sources to the data center 10 is 20%. Based on the comparison of the energy quotient ($E_Q$) with the green energy percentage (g) of data center 10, energy efficiency module 32 may specify a value for a green quotient of data center 10 ($GQ_{dc}$) that indicates whether data center 10 is energy efficient, such as shown in the example below.

$$GQ_{dc} = \begin{cases} 101 - 101^{\left(\frac{E_Q - g}{100 - g}\right)}, & E_Q > g \\ 100, & E_Q \leq g \end{cases}$$

In this example, if the energy quotient ($E_Q$) of data center 10 is less than or equal to the green energy percentage (g) of data center 10 (e.g., $E_Q \leq g$), energy efficiency module 32 specifies a value (e.g., 100) for the green quotient of data center 10 ($GQ_{dc}$) that indicates that the energy usage by data center 10 is energy efficient (e.g., "green"). For example, if 20% of energy sources provided or allocated to data center 10 are from renewable energy sources, the value of 100 specified for the green quotient of the data center, indicates the energy usage by data center 10 does not exceed the 20% of renewable energy provided or allocated to data center 10. If the energy quotient ($E_Q$) of data center 10 is greater than the green energy percentage (g) of data center 10 (e.g., $E_Q > g$), energy efficiency module 32 specifies a value (e.g., $101 - 101^{\left(\frac{E_Q - g}{100 - g}\right)}$) for the green quotient of data center 10 ($GQ_{dc}$) that indicates the energy usage by data center 10 is not energy efficient (e.g., "not green"). Continuing the example described above, if 20% of energy sources provided or allocated to data center 10 are from renewable energy sources, the value (e.g., $101 - 101^{\left(\frac{E_Q - g}{100 - g}\right)}$) for the green quotient of data center 10 indicates the energy usage by data center 10 exceeds the amount of renewable energy provided or allocated to data center 10. As can be inferred from the formula, $GQ_{dc}$ increases exponentially as the renewable energy percentage goes up from g% to 100%.

Based on the green quotient of data center 10 ($GQ_{dc}$), energy efficiency module 32 may cause edge services controller 28 to invoke one or more actions to improve the energy usage of data center 10. For example, energy efficiency module 32 may, in response to determining that the green quotient of data center 10 is a value that indicates data center 10 is not energy efficient (e.g., not 100), cause edge services controller 28 to modify a network protocol implemented by devices within data center 10 to another network protocol that is more energy efficient (e.g., use less power). For instance, network devices, such as chassis switches 18 and TOR switches 16, and/or virtual routers implemented by servers 12 may use one or more network protocols in which certain network protocols may cause devices to consume more energy than other network protocols (e.g., by processing more data). In these examples, energy efficiency module 32 may, in response to determining that the green quotient of data center 10 is a value that indicates data center 10 is not energy efficient (e.g., not 100), cause edge services controller 28 to modify the network protocol implemented by virtual routers and/or physical network devices (e.g., switches 18 and TOR switches 16) in data center 10 (e.g., change the implementation of a first network protocol to a second network protocol that is more energy efficient than the first network protocol).

In some examples, energy efficiency module 32 may, in response to determining that the green quotient of data center 10 is a value that indicates data center 10 is not energy efficient (e.g., not 100), cause edge services controller 28 to modify a tunneling protocol implemented in the underlay network of the data center to another tunneling protocol that is more energy efficient. For example, physical and/or virtual network devices within data center 10 may perform encapsulation and/or decapsulation of network packets to tunnel the network packets through the physical network infrastructure of data center 10. Certain tunneling protocols may cause devices to consume more energy than other tunneling protocols (e.g., by processing more data). In these examples, energy efficiency module 32 may, in response to determining that the green quotient of data center 10 is a value that indicates data center 10 is not energy efficient (e.g., not 100), cause edge services controller 28 to modify the tunneling protocol implemented by network devices in data center 10 (e.g., change the implementation of a first tunneling protocol to a second tunneling protocol that is more energy efficient than the first tunneling protocol).

In some examples, energy efficiency module 32 may, in response to determining that the green quotient of data center 10 is a value that indicates data center 10 is not energy efficient (e.g., not 100), cause edge services controller 28 to automatically scale port speeds of high-speed interfaces of one or more devices within data center 10. For example, NICs 13 may include one or more high speed interfaces configured to exchange packets using links of an underlying physical network. These interfaces may include a port interface card having one or more network ports. In these examples, energy efficiency module 32 may, in response to determining that the green quotient of data center 10 is a value that indicates data center 10 is not energy efficient (e.g., not 100), cause edge services controller 28 to automatically scale port speeds of high-speed interfaces of NICs 13.

In some examples in which the devices within data center 10 may implement high availability to provide redundancy and reliability for packet-based communications, energy efficiency module 32 may, in response to determining that the green quotient of data center 10 is a value that indicates data center 10 is not energy efficient (e.g., not 100), cause edge services controller 28 to reduce the number of duplicate and/or Equal-Cost Multi-Path (ECMP) paths used to provide high availability. In some examples, a computing system as described herein modifies an Equal Cost Multipath (ECMP) algorithm or a weighted ECMP (wECMP) algorithm to take into account the energy cost of the different paths (e.g., using target distance and/or hop count) when classifying packet flows to respective paths of the different paths, as further described below. In some examples in which high availability is disabled, energy efficiency module 32 may, in response to determining that the green quotient of data center 10 is a value that indicates data center 10 is not energy efficient (e.g., not 100), cause edge services controller 28 to shut down one or more network devices (e.g., half) that are configured to implement high availability.

In some examples, energy efficiency module 32 may, in response to determining that the green quotient of data center 10 is a value that indicates data center 10 is not energy efficient (e.g., not 100), cause edge services controller 28 to proactively activate a cooling system of the data center. In some examples, edge services controller 28 may activate a cooling system of the data center prior to the temperature of the data center exceeding a configured temperature threshold that automatically activates the cooling system of the data center.

In some examples, energy efficiency module 32 may, in response to determining that the green quotient of data center 10 is a value that indicates data center 10 is not energy efficient (e.g., not 100), cause edge services controller 28 to automatically scale a packet size (e.g., maximum transmission unit (MTU) size) of packets. For example, the payload size in each packet may influence energy usage. For example, a smaller MTU size of packets may result in the generation of more packets, which may increase energy usage. In these examples, energy efficiency module 32 may, in response to determining that the green quotient of data center 10 is a value that indicates data center 10 is not energy efficient (e.g., not 100), cause edge services controller 28 to automatically scale the MTU size of packets.

The above actions are merely examples. Energy efficiency module 32 may perform other actions, such as alerting an administrator that data center 10 is not energy efficient and, in some example, provide a recommended action to reduce the energy consumption by data center 10.

As another example, energy efficiency module 32 is configured to determine the energy efficiency of an application workload deployed by data center 10, referred to herein as a green quotient of an application $(GQ_{app})$. In these examples, energy efficiency module 32 obtains telemetry data, including energy usage data of data center 10, and based on the energy usage data, determines the green quotient of data center 10 when the application is running $(GQ_{dc2})$ that indicates the energy efficiency of data center 10 when the application is running, and determines the green quotient of data center 10 when the application is not running $(GQ_{dc1})$ that indicates the energy efficiency of data center 10 when the application is not running. The green quotient of data center 10 when the application is not running may represent the energy efficiency of a stable data center 10. As described above, energy efficiency module 32 may determine the green quotient of the data center based on a computation of the "energy quotient" $(E_Q)$ of the data center. In this example, energy efficiency module 32 may compute the "energy quotient" $(E_Q)$ of data center 10 when the application is not running. For example, energy efficiency module 32 may determine a percentage of the total energy usage $(E_T)$ consumed by the current energy usage $(Ec)$ of data center 10 when the application is not running, and determine the green quotient of the data center when the application is not running $(GQ_{dc1})$ based on a computation of the "energy quotient" $(E_Q)$ of data center 10 when the application is not running. Energy efficiency module 32 may also determine a percentage of the total energy usage ($E_T$) consumed by the current energy usage ($E_C$) of data center 10 when the application is running, and determine the green quotient of the data center when the application is running ($GQ_{dc2}$) based on a computation of the "energy quotient" ($E_Q$) of data center 10 when the application is running. In some examples, the green quotient of the data center when the application is running ($GQ_{dc2}$) may represent an average of green quotients computed for data center 10 when the application is running over a period of time.

Energy efficiency module 32 computes a delta ($GQ_\Delta$) of the green quotient of data center 10 when the application is running ($GQ_{dc2}$) and the green quotient of data center 10 when the application is not running ($GQ_{dc1}$) to determine the energy usage of the application, as shown in the example below.

$$GQ_\Delta = GQ_{dc2} - GQ_{dc1}$$

Energy efficiency module 32 then compares the energy usage of the application (e.g., $GQ_\Delta$) with the green energy percentage ($g$) of data center 10, and based on that comparison, specifies a value for green quotient of the application ($GQ_{app}$) that indicates whether data center 10 deploying the application is energy efficient, such as shown in the example below.

$$GQ_{app} = \begin{cases} GQ_\Delta, & GQ_\Delta > g \\ 100, & GQ_\Delta \leq g \end{cases}$$

In this example, if the energy usage of the application is less than or equal to the green energy percentage of data center 10 (e.g., $GQ_\Delta \leq g$), energy efficiency module 32 specifies a value (e.g., 100) for the green quotient of the application ($GQ_{app}$) that indicates data center 10 deploying the application is energy efficient. For example, if 20% of energy sources provided or allocated to data center 10 are from renewable energy sources, the value of 100 specified for the green quotient of the application indicates the energy usage by data center 10 that deploys the application does not exceed the 20% of renewable energy provided or allocated to data center 10. If the energy usage of the application is greater than the percentage of energy provided by one or more renewable energy sources to the data center (e.g., $GQ_\Delta > g$), energy efficiency module 32 specifies a value (e.g., $GQ_\Delta$) for the green quotient of the application ($GQ_{app}$) that indicates data center 10 deploying the application is not energy efficient. Continuing the example described above, if 20% of energy sources provided or allocated to data center 10 are from renewable energy sources, the value of not 100 specified for the green quotient of the application indicates the energy usage by data center 10 that deploys the application exceeds the 20% of renewable energy provided or allocated to data center 10.

Based on the green quotient of the application ($GQ_{app}$), energy efficiency module 32 may cause edge services controller 28 to invoke one or more actions to improve the energy usage of data center 10 deploying the application. In some examples, energy efficiency module 32 may, in response to determining that the green quotient of the application is a value that indicates data center 10 is not energy efficient (e.g., not 100), cause edge services controller 28 to automatically deploy application workloads to one or more select servers to reduce energy consumption by data center 10. For example, certain servers 12 may consume more energy due to being overloaded with application workloads. In these examples, energy efficiency module 32 may, in response to determining that the green quotient of the application is a value that indicates data center 10 is not energy efficient (e.g., not 100), cause edge services controller 28 to automatically deploy application workloads to select servers 12 or deploy the application workloads in a way to reduce energy consumption by data center 10 (e.g., by not deploying the application workloads to servers that are currently consuming more energy).

In some examples, energy efficiency module 32 may, in response to determining that the green quotient of the application is a value that indicates data center 10 is not energy efficient (e.g., not 100), cause edge services controller 28 to migrate application workloads to fewer servers and shutdown remaining unused servers. For example, application workloads may be deployed on a plurality of servers 12, e.g., servers 12A-12C. In these examples, energy efficiency module 32 may, in response to determining that the green quotient of the application is a value that indicates data center 10 is not energy efficient (e.g., not 100), cause edge services controller 28 to migrate application workloads to fewer servers, e.g., servers 12A and 12B, and shutdown remaining unused servers, e.g., server 12C.

In some examples, energy efficiency module 32 may, in response to determining that the green quotient of the application is a value that indicates data center 10 is not energy efficient (e.g., not 100), cause edge services controller 28 to activate the cooling system. In some examples, edge services controller 28 may proactively activate the cooling system of the data center prior to the temperature of data center 10 exceeding a configured temperature threshold.

In some examples, energy efficiency module 32 may, in response to determining that the green quotient of the application is not energy efficient (e.g., not 100), cause edge services controller 28 to disable the scaling of applications if the energy usage of the application exceeds a configured threshold. For example, application workloads may be deployed on a plurality of servers 12. The deployment of additional application workloads on servers 12 may cause data center 10's energy usage to not be energy efficient. In these examples, energy efficiency module 32 may, in response to determining that the green quotient of the application is a value that indicates data center 10 is not energy efficient (e.g., not 100), cause edge services controller 28 to disable scaling of application workloads on servers 12.

In some examples, customers may prefer performance over energy efficiency of data center 10 or vice versa. In these examples, customers may specify requirements when the green quotient of the application exceeds a configured threshold. For example, one or more servers 12 may run a crypto mining application. In this example, a customer may specify a configured threshold for certain applications that enables data center 10 to operate with less energy efficiency to allow for higher performance. In this example, the customer may specify requirements to invoke one or more actions to improve the energy usage of data center 10 only if the green quotient of the application $(GQ_{app})$ exceeds the configured threshold. In this way, the customer may specify requirements to control whether the data center 10 is to be more energy efficient or to have more performance.

The above actions are merely examples. Energy efficiency module 32 may perform other actions, such as alerting an administrator that data center 10 deploying the application workload is not energy efficient and, in some example, provide a recommended action to reduce the energy consumption by data center 10.

In some examples, energy efficiency module 32 may determine a pattern to the energy usage of data center 10 and/or one or more applications running on data center 10. For example, energy efficiency module 32 may implement one more machine learning models (e.g., supervised learning, unsupervised learning, or other machine learning models) to determine a pattern to data center 10's energy usage and/or pattern to the application's energy usage that repeatedly exceeds the green energy percentage ($g$) of data center 10. Based on the determined pattern, energy efficiency module 32 may cause edge services controller 28 to invoke one or more actions to improve the energy usage of data center 10 and/or the application before data center 10 becomes less energy efficient (e.g., before the green quotient of data center 10 $(GQ_{dc})$ or green quotient of the application $(GQ_{app})$ is specified with a value that is not 100). In some examples, energy efficiency module 32 may cause edge services controller 28 to pre-set a cooling system of the data center to activate prior to the temperature of the data center exceeding a configured temperature threshold. For example, energy efficiency module 32 may determine that a particular application running on servers 12A-12C may repeatedly cause the temperature of data center 10 to rise above the configured temperature threshold. In this example, energy efficiency module 32 may cause edge services controller 28 to pre-set the cooling system to activate when the application starts running on servers 12A-12C prior to the temperature of data center 10 rising above the configured temperature threshold.

In some examples, energy efficiency module 32 may cause edge services controller 28 to proactively migrate applications to less servers. For example, energy efficiency module 32 may determine that any application running on servers 12A-12C may repeatedly cause the energy usage of data center 10 to exceed the green energy percentage of data center 10. In this example, energy efficiency module 32 may cause edge services controller 28 to migrate the application workload to less servers, e.g., servers 12A and 12B, prior to running the application on servers 12 of data center 10.

In accordance with the techniques of the disclosure, one or more network devices, such as edge services controller 28, switches 16 and 18, servers 12, or other type of computing device, may classify packet flows to different paths of a computer network based at least in part on an energy cost of each path of the plurality of different paths.

ECMP is a network routing strategy where multiple packets destined for a single destination are load-balanced over multiple paths of equal (or substantially equal) cost. In traditional routing, data packets are sent along a single best path. However, when using ECMP, a network device distributes packets across several equally efficient routes. ECMP operates by identifying multiple paths between a source and destination that have the same cost. Conventionally, the cost is determined based on metrics of each path, such as hop count, bandwidth, or delay. Once multiple equal-cost paths are identified, the routing process distributes traffic across these paths in a balanced manner. In some examples, the distribution of packets is based on hashing algorithms that consider factors such as source and destination IP addresses, port numbers, or packet size to ensure a uniform distribution of traffic across the multiple paths.

In some situations, equal distribution of traffic across multiple paths may not desirable if local links to adjacent network devices towards a destination have unequal capacity. Typically, a traffic distribution between two links is equal and therefore the link utilization may be the same. However, if the capacity of an aggregated Ethernet bundle changes, equal traffic distribution results in imbalance of link utilization. This may occur, for example, where one link of an aggregated Ethernet bundle provides substantially higher bandwidth than another link of the aggregated Ethernet bundle. In this case, wECMP enables load balancing of traffic between equal cost paths in proportion to the capacity of the local links. wECMP is a network routing strategy similar to ECMP, but wECMP attempts to load balance traffic between multiple equal cost paths in proportion to different metrics, or "weights" of each path. In some examples, wECMP load balances traffic between multiple equal cost paths in proportion to a capacity or bandwidth of each corresponding path.

As an example, chassis switch 18A determines a wECMP cost of each of different paths 102A-102B (collectively, "paths 102") over which to forward packets to server 12A. In the example of FIG. 1, the different paths include a first path 102A from chassis switch 18A, through TOR switch 16A, to server 12A and a second path 102B from chassis switch 18A, through TOR switch 16N, to server 12A. However, in other examples, the different paths may include, e.g., different interfaces of a network device, different links to which the network device is connected, or different links of an aggregated bundle of Ethernet links between two network devices.

Chassis switch 18A determines an energy cost of each of the paths. In some examples, chassis switch 18A computes the energy cost based on a number of hops of each path. In some examples, chassis switch 18A computes the energy cost based on a geographic distance of each path. In other examples, chassis switch 18A may compute the energy cost by computing a green-BitCost metric for each path, which is representative of the energy cost of each path. As described in more detail below, the green-BitCost metric may be computed, for example, based at least in part on physical parameters of each path, such as a distance, speed, or optics-type of each path, device characteristics of one or more network devices implementing the path, such as a model of the network device or a type of one or more components of the network device, or a Watt-per-bit cost of the path.

Chassis switch 18A modifies the wECMP cost of each path of the plurality of different paths based at least in part on the determined energy cost of the corresponding path to obtain a modified wECMP cost. Chassis switch 18A load balances the packets over the different paths in accordance with the modified wECMP cost. With respect to the example of FIG. 1, chassis switch 18A load balances the packets over paths 102A and 102B in accordance with the modified wECMP cost. Therefore, using the techniques described herein, chassis switch 18A may modify a wECMP cost of paths 102A and 102B so as to take into account the energy cost of each corresponding path 102.

In some examples, the techniques of the disclosure may enable a network device to apply different network policies based on utilization rates of the computer network. For example, a network device as described herein may apply, during an "off-peak" or low-usage time of a computer network, a first network policy that takes into account the energy cost of each path when classifying packet flows to respective paths. Further, the network device may apply, during a "peak" or high-usage time of the computer network, a second network policy that applies a shortest-path or equal-cost algorithm to classify packet flows to respective paths without taking into account the energy cost of each path. In this fashion, the network device may maximize energy-saving techniques while network congestion is not an important factor, and maximize network throughput when network congestion is adversely affecting the computer network.

The foregoing example of FIG. 1 provides an example wherein chassis switch 18A of switch fabric 14 within data center 10 includes the energy cost of each corresponding path 102 when performing path selection for the forwarding packets across switch fabric 14 to server 12A. However, the techniques described herein may be applied to enable a network device to consider the energy cost of a path during path selection in a number of different scenarios. For example, the techniques of the disclosure may be applied to enable a network device to consider the energy cost of paths during path selection amongst network devices within data center 10, such as between two servers 12 or between a server 12 and network device 16, 18, or in addition (or in the alternative), during path selection amongst network devices of service provider network 7 (not depicted in FIG. 1) when forming a path between two of customer sites 11, data center 10, another data center (not depicted in FIG. 1), and/or public network 4.

FIG. 2 is a block diagram illustrating an example computing device that uses a network interface card having a separate processing unit, with which examples of the techniques described herein may be performed. Computing device 200 of FIG. 2 may represent a real or virtual server and may represent an example instance of any of servers 12 of FIG. 1. Computing device 200 includes in this example, a bus 242 coupling hardware components of a computing device 200 hardware environment. Bus 242 couples SR-IOV-capable network interface card (NIC) 230, storage disk 246, and microprocessor 210. A front-side bus may in some cases couple microprocessor 210 and memory device 244. In some examples, bus 242 may couple memory device 244, microprocessor 210, and NIC 230. Bus 242 may represent a Peripheral Component Interface (PCI) express (PCIe) bus. In some examples, a direct memory access (DMA) controller may control DMA transfers among components coupled to bus 242. In some examples, components coupled to bus 242 control DMA transfers among components coupled to bus 242.

Microprocessor 210 may include one or more processors each including an independent execution unit ("processing core") to perform instructions that conform to an instruction set architecture. Execution units may be implemented as separate integrated circuits (ICs) or may be combined within one or more multi-core processors (or "many-core" processors) that are each implemented using a single IC (i.e., a chip multiprocessor).

Disk 246 represents computer readable storage media that includes volatile and/or non-volatile, removable and/or non-removable media implemented in any method or technology for storage of information such as processor-readable instructions, data structures, program modules, or other data. Computer readable storage media includes, but is not limited to, random access memory (RAM), read-only memory (ROM), EEPROM, flash memory, CD-ROM, digital versatile discs (DVD) or other optical storage, magnetic cassettes, magnetic tape, magnetic disk storage or other magnetic storage devices, or any other medium that can be used to store the desired information and that can be accessed by microprocessor 210.

Main memory 244 includes one or more computer-readable storage media, which may include random-access memory (RAM) such as various forms of dynamic RAM (DRAM), e.g., DDR2/DDR3 SDRAM, or static RAM (SRAM), flash memory, or any other form of fixed or removable storage medium that can be used to carry or store desired program code and program data in the form of instructions or data structures and that can be accessed by a computer. Main memory 144 provides a physical address space composed of addressable memory locations.

Network interface card (NIC) 230 includes one or more interfaces 232 configured to exchange packets using links of an underlying physical network. Interfaces 232 may include a port interface card having one or more network ports. NIC 230 also include an on-card memory 227 to, e.g., store packet data. Direct memory access transfers between the NIC 230 and other devices coupled to bus 242 may read/write from/to the memory 227.

Memory 244, NIC 230, storage disk 246, and microprocessor 210 provide an operating environment for a software stack that executes a hypervisor 214 and one or more virtual machines 228 managed by hypervisor 214.

In general, a virtual machine provides a virtualized/guest operating system for executing applications in an isolated virtual environment. Because a virtual machine is virtualized from physical hardware of the host server, executing applications are isolated from both the hardware of the host and other virtual machines.

An alternative to virtual machines is the virtualized container, such as those provided by the open-source DOCKER Container application. Like a virtual machine, each container is virtualized and may remain isolated from the host machine and other containers. However, unlike a virtual machine, each container may omit an individual operating system and provide only an application suite and application-specific libraries. A container is executed by the host machine as an isolated user-space instance and may share an operating system and common libraries with other containers executing on the host machine. Thus, containers may require less processing power, storage, and network resources than virtual machines. As used herein, containers may also be referred to as virtualization engines, virtual private servers, silos, or jails. In some instances, the techniques described herein with respect to containers and virtual machines or other virtualization components.

While virtual network endpoints in FIG. 2 are illustrated and described with respect to virtual machines, other operating environments, such as containers (e.g., a DOCKER container) may implement virtual network endpoints. An operating system kernel (not shown in FIG. 2) may execute in kernel space and may include, for example, a Linux, Berkeley Software Distribution (BSD), another Unix-variant kernel, or a Windows server operating system kernel, available from MICROSOFT.

Computing device 200 executes a hypervisor 214 to manage virtual machines 228. Example hypervisors include Kernel-based Virtual Machine (KVM) for the Linux kernel, Xen, ESXi available from VMWARE, Windows Hyper-V available from MICROSOFT, and other open-source and proprietary hypervisors. Hypervisor 214 may represent a virtual machine manager (VMM).

Virtual machines 228 may host one or more applications, such as virtual network function instances. In some examples, a virtual machine 228 may host one or more VNF instances, where each of the VNF instances is configured to apply a network function to packets.

Hypervisor 214 includes a physical driver 225 to use the physical function 221 provided by network interface card 230. In some cases, network interface card 230 may also implement SR-IOV to enable sharing the physical network function (I/O) among virtual machines 224. Each port of NIC 230 may be associated with a different physical function. The shared virtual devices, also known as virtual functions, provide dedicated resources such that each of virtual machines 228 (and corresponding guest operating systems) may access dedicated resources of NIC 230, which therefore appears to each of virtual machines 224 as a dedicated NIC. Virtual functions 217 may represent lightweight PCIe functions that share physical resources with the physical function 221 and with other virtual functions 216. NIC 230 may have thousands of available virtual functions according to the SR-IOV standard, but for I/O-intensive applications the number of configured virtual functions is typically much smaller.

Virtual machines 228 include respective virtual NICs 229 presented directly into the virtual machine 228 guest operating system, thereby offering direct communication between NIC 230 and the virtual machine 228 via bus 242, using the virtual function assigned for the virtual machine. This may reduce hypervisor 214 overhead involved with software-based, VIRTIO and/or vSwitch implementations in which hypervisor 214 memory address space of memory 244 stores packet data and packet data copying from the NIC 230 to the hypervisor 214 memory address space and from the hypervisor 214 memory address space to the virtual machines 228 memory address space consumes cycles of microprocessor 210.

NIC 230 may further include a hardware-based Ethernet bridge or embedded switch 234. Ethernet bridge 234 may perform layer 2 forwarding between virtual functions and physical functions of NIC 230. Bridge 234 thus in some cases provides hardware acceleration, via bus 242, of inter-virtual machine 224 packet forwarding and of packet forwarding between hypervisor 214, which accesses the physical function via physical driver 225, and any of virtual machines 224. The embedded switch 234 may be physically separate from processing unit 25.

Computing device 200 may be coupled to a physical network switch fabric that includes an overlay network that extends switch fabric from physical switches to software or "virtual" routers of physical servers coupled to the switch fabric, including virtual router 220. Virtual routers may be processes or threads, or a component thereof, executed by the physical servers, e.g., servers 12 of FIG. 1, that dynamically create and manage one or more virtual networks usable for communication between virtual network endpoints. In one example, virtual routers implement each virtual network using an overlay network, which provides the capability to decouple an endpoint's virtual address from a physical address (e.g., IP address) of the server on which the endpoint is executing. Each virtual network may use its own addressing and security scheme and may be viewed as orthogonal from the physical network and its addressing scheme. Various techniques may be used to transport packets within and across virtual networks over the physical network. At least some functions of virtual router may be performed as one of services 233.

In the example computing device 200 of FIG. 2, virtual router 220 executes within hypervisor 214 that uses physical function 221 for I/O, but virtual router 220 may execute within a hypervisor, a host operating system, a host application, one of virtual machines 228, and/or processing unit 25 of NIC 230.

In general, each virtual machine 228 may be assigned a virtual address for use within a corresponding virtual network, where each of the virtual networks may be associated with a different virtual subnet provided by virtual router 220. A virtual machine 228 may be assigned its own virtual layer three (L3) IP address, for example, for sending and receiving communications but may be unaware of an IP address of the computing device 200 on which the virtual machine is executing. In this way, a "virtual address" is an address for an application that differs from the logical address for the underlying, physical computer system, e.g., computing device 200.

In one implementation, computing device 200 includes a virtual network (VN) agent (not shown) that controls the overlay of virtual networks for computing device 200 and that coordinates the routing of data packets within computing device 200. In general, a VN agent communicates with a virtual network controller for the multiple virtual networks, which generates commands to control routing of packets. A VN agent may operate as a proxy for control plane messages between virtual machines 228 and virtual network controller, such as controller 24. For example, a virtual machine may request to send a message using its virtual address via the VN agent, and VN agent may in turn send the message and request that a response to the message be received for the virtual address of the virtual machine that originated the first message. In some cases, a virtual machine 228 may invoke a procedure or function call presented by an application programming interface of VN agent, and the VN agent may handle encapsulation of the message as well, including addressing.

In one example, network packets, e.g., layer three (L3) IP packets or layer two (L2) Ethernet packets generated or consumed by the instances of applications executed by virtual machine 228 within the virtual network domain may be encapsulated in another packet (e.g., another IP or Ethernet packet) that is transported by the physical network. The packet transported in a virtual network may be referred to herein as an "inner packet" while the physical network packet may be referred to herein as an "outer packet" or a "tunnel packet." Encapsulation and/or de-capsulation of virtual network packets within physical network packets may be performed by virtual router 220. This functionality is referred to herein as tunneling and may be used to create one or more overlay networks. Besides IPinIP, other example tunneling protocols that may be used include IP over Generic Route Encapsulation (GRE), VxLAN, Multiprotocol Label Switching (MPLS) over GRE, MPLS over User Datagram Protocol (UDP), etc.

As noted above, a virtual network controller may provide a logically centralized controller for facilitating operation of one or more virtual networks. The virtual network controller may, for example, maintain a routing information base, e.g., one or more routing tables that store routing information for the physical network as well as one or more overlay networks. Virtual router 220 of hypervisor 214 implements a network forwarding table (NFT) 222A-222N for N virtual networks for which virtual router 220 operates as a tunnel endpoint. In general, each NFT 222 stores forwarding information for the corresponding virtual network and identifies where data packets are to be forwarded and whether the packets are to be encapsulated in a tunneling protocol, such as with a tunnel header that may include one or more headers for different layers of the virtual network protocol stack. Each of NFTs 222 may be an NFT for a different routing instance (not shown) implemented by virtual router 220.

An edge services platform leverages processing unit 25 of NIC 230 to augment the processing and networking functionality of computing device 200. Processing unit 25 includes processing circuitry 231 to execute services orchestrated by edge services controller 28. Processing circuitry 231 may represent any combination of processing cores, ASICs, FPGAs, or other integrated circuits and programmable hardware. In an example, processing circuity may include a System-on-Chip (SoC) having, e.g., one more cores, a network interface for high-speed packet processing, one or more acceleration engines for specialized functions (e.g., security/cryptography, machine learning, storage), programmable logic, integrated circuits, and so forth. Such SoCs may be referred to as data processing units (DPUs). DPUs may be examples of processing unit 25.

In the example NIC 230, processing unit 25 executes an operating system kernel 237 and a user space 241 for services. Kernel may be a Linux kernel, a Unix or BSD kernel, a real-time OS kernel, or other kernel for managing hardware resources of processing unit 25 and managing user space 241.

Services 233 may include network, security, storage, data processing, co-processing, machine learning or other services, such as energy efficiency services, in accordance with techniques described in this disclosure. Processing unit 25 may execute services 233 and edge service platform (ESP) agent 236 as processes and/or within virtual execution elements such as containers or virtual machines. As described elsewhere herein, services 233 may augment the processing power of the host processors (e.g., microprocessor 210) by, e.g., enabling the computing device 200 to offload packet processing, security, or other operations that would otherwise be executed by the host processors.

Processing unit 25 executes edge service platform (ESP) agent 236 to exchange data and control data with an edge services controller for the edge service platform. While shown in user space 241, ESP agent 236 may be a kernel module 237 in some instances.

As an example, ESP agent 236 may collect and send, to the ESP controller, telemetry data generated by services 233, the telemetry data describing traffic in the network, computing device 200 or network resource availability, resource availability of resources of processing unit 25 (such as memory or core utilization), and/or resource energy usage. As another example, ESP agent 236 may receive, from the ESP controller, service code to execute any of services 233, service configuration to configure any of services 233, packets or other data for injection into the network.

Edge services controller 28 manages the operations of processing unit 25 by, e.g., orchestrating and configuring services 233 that are executed by processing unit 25; deploying services 233; NIC 230 addition, deletion and replacement within the edge services platform; monitoring of services 233 and other resources on NIC 230; and management of connectivity between various services 233 running on NIC 230. Example resources on NIC 230 include memory 227 and processing circuitry 231. In some examples, edge services controller 28 may invoke one or more actions to improve energy usage of data center 10 via managing the operations of processing unit 25. In some examples, edge services controller 28 may set a target green quotient for processing unit 25 that causes processing unit 25 to select or adjust a particular routing or tunnel protocol, particular algorithm, MTU size, interface, and/or any of services 233.

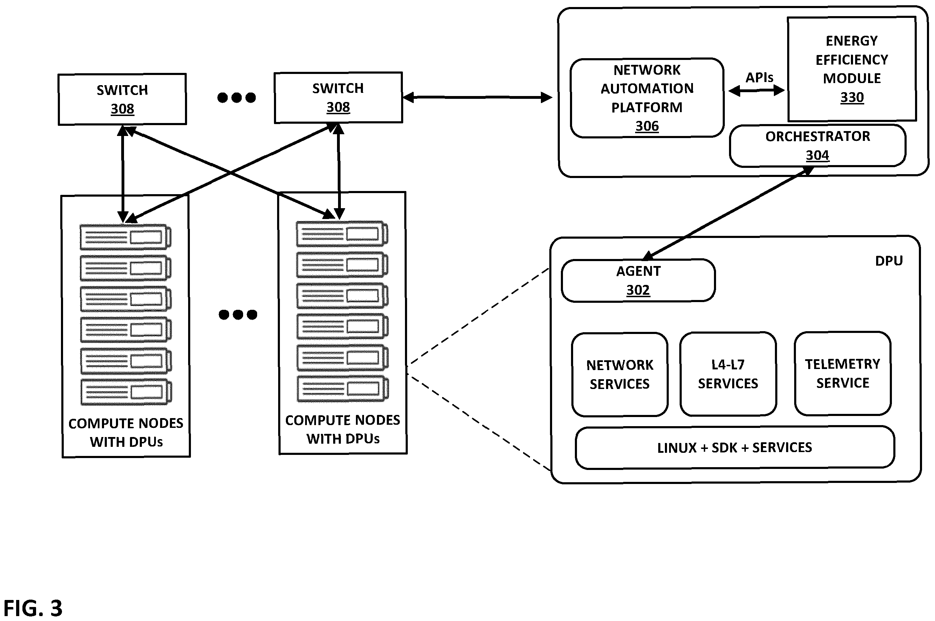

FIG. 3 is a conceptual diagram illustrating a data center with servers that each include a network interface card having a separate processing unit, controlled by an edge services platform. Racks of compute nodes may correspond to servers 12 of FIG. 1, and switches 308 may correspond to the switches of fabric 14 of FIG. 1. An agent 302 or orchestrator 304 represents software executed by the processing unit (illustrated in FIG. 3 as a data processing unit or DPU) and receives configuration information for the processing unit and sends telemetry and other information for the NIC that includes the processing unit to orchestrator 304. Network services, L4-L7 services, and telemetry service, such as a telemetry exporter 312, may represent examples of services 233. Orchestrator 304 may represent an example of edge services controller 28 of FIG. 1.

Network automation platform 306 connects to and manages network devices and orchestrator 304, by which network automation platform 306 can utilize the edge services platform. Network automation platform 306 may, for example, deploy network device configurations, manage the network, extract telemetry, and analyze and provide indications of the network status.

Energy efficiency module 330 may represent an example instance of energy efficiency module 32 of FIG. 1. In some examples, energy efficiency module 330 may, based on a determination that the green quotient of data center 10 $(GQ_{dc})$ is a value that indicates data center is not energy efficient (e.g., not 100), instruct network automation platform 306 to manage network device configurations, such as modifying network protocols implemented by network devices, modify tunneling protocols implemented by network devices, scale port speeds, scale MTU size of packets, reduce the number of duplicate/ECMP paths for high availability, disable network devices if high availability is disabled, etc. In some examples, energy efficiency module 330 may instruct network automation platform 306 to manage cooling systems to proactively activate cooling systems and/or pre-set the configuration of the cooling systems. In some examples, energy efficiency module 330 may, based on a determination that the green quotient of data center 10 $(GQ_{dc})$ or green quotient of an application running on data center 10 $(GQ_{app})$ is a value indicating data center 10 is not energy efficient (e.g., not 100), instruct network automation platform 306 to manage network device configurations, such as managing the deployment of application workloads (e.g., migrate application workloads to fewer hosts and disabling unused hosts, disabling workload scaling).

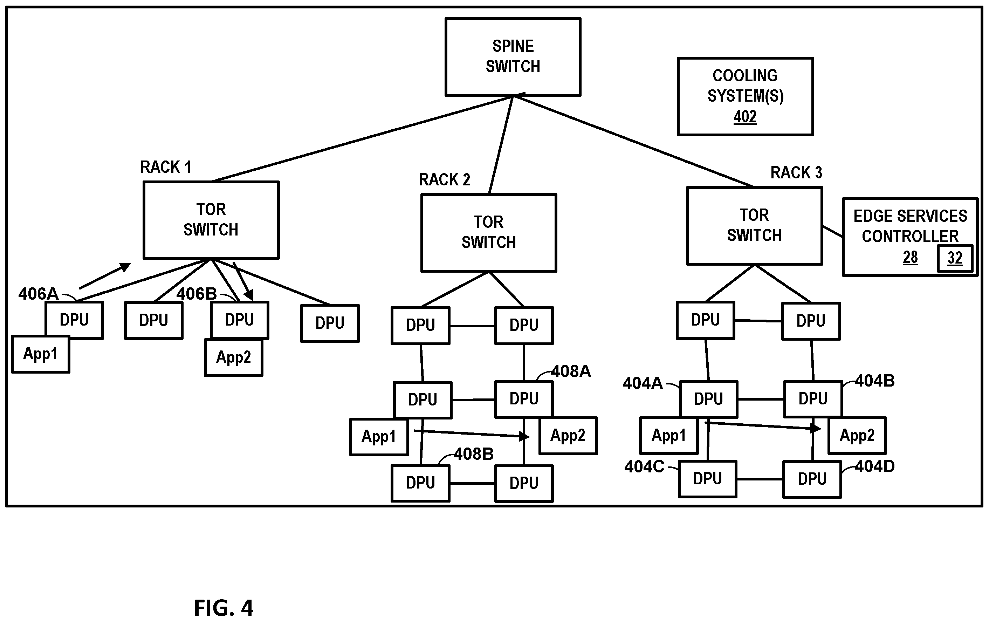

FIG. 4 is a diagram illustrating an example data center having a server connected by a switch fabric, with NICs forming independent NIC fabrics. The servers are not shown in FIG. 4. Edge services controller 28 may manage one or more data centers, but more ease of illustration, edge services controller 28 is managing a single data center in FIG. 4. FIG. 4 illustrates an example of three different kinds of connectivity between NICs and TORs in each rack. Rack 1 illustrates a traditional datacenter connectivity. In this example, every NIC is directly connected to a TOR port. In this configuration, applications, e.g., App1 and App2, can only communicate through TOR, thus increasing latency. Rack 2 illustrates a connectivity in which application latency optimized connectivity. In this example, some NICs are connected to TOR while the remaining NICs have indirect connectivity to TORs. In this example, applications, e.g., App1 and App2, can directly communicate with each other (through back-to-back NIC connection). Rack 3 is similar in connectivity as Rack 2 (e.g., some NICs connected to TOR while remaining NICs have indirect connectivity to TORs) but with the addition of high availability using multiple connections between NICs.

As one example, energy efficiency module 32 of edge services controller 28 may compute a green quotient of the data center and determine that the green quotient of the data center is a value that indicates the data center is not energy efficient (e.g., not 100). In this example, energy efficiency module 32 may, in response to determining that the green quotient of the data center is a value that indicates the data center is not energy efficient, instruct edge services controller 28 to manage network device configurations in Rack 3 to reduce the number of duplicate and/or Equal-Cost Multi-Path (ECMP) paths used to provide high availability. For example, edge services controller 28 may send instructions to agents 302 executed by the processing unit of NICs 404A and 404B to reduce the number of duplicate and/or ECMP paths used to provide high availability. In some examples, energy efficiency module 32 may, in response to determining that the green quotient of the data center is a value that indicates the data center is not energy efficient, instruct edge services controller 28 to manage network device configurations in Rack 3 to modify an Equal Cost Multipath (ECMP) algorithm or a weighted ECMP (wECMP) algorithm to take into account the energy cost of the different paths (e.g., using target distance and/or hop count) when classifying packet flows to respective paths of the different paths, as further described below. In some examples in which high availability is disabled, energy efficiency module 32 may, in response to determining that the green quotient of the data center is a value that indicates the data center is not energy efficient, cause edge services controller 28 to shut down one or more network devices (e.g., half) that are configured to implement high availability, e.g., network devices including NICs 404C and 404D.

As another example, energy efficiency module 32 may, in response to determining that the green quotient of the data center is a value that indicates the data center is not energy efficient, instruct edge services controller 28 to manage network device configurations in Rack 1 to modify the tunneling protocol implemented by NICs in Rack 1 to implement a different tunneling protocol that is more energy efficient, e.g., NICs 406A and 406B.

As another example, energy efficiency module 32 may, in response to determining that the green quotient of the data center is a value that indicates the data center is not energy efficient, instruct edge services controller 28 to manage one or more cooling systems 402 of the data center to proactively activate cooling systems 402 and/or pre-set configurations for cooling systems 402.

As another example, energy efficiency module 32 may, in response to determining that the green quotient of the application is a value that indicates the data center is not energy efficient, instruct edge services controller 28 to manage the deployment of application workloads in Rack 2. For example, edge services controller 28 may deploy App2 in a different server, such as the server including NIC 408B, and manage the network device configurations to enable NIC 408B to send and receive packets for App2.

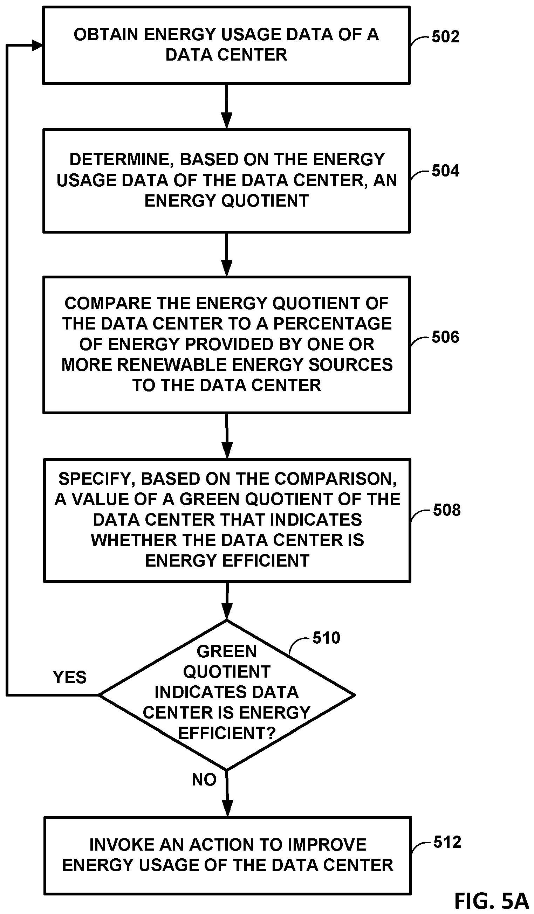

FIG. 5 is a flow chart of an example operation of edge services controller 28 to provide self-learning green networks. In the example of FIG. 5, energy efficiency module 32 of edge services controller 28 may determine a green quotient of the data center and invoke one or more actions based on the green quotient of the data center to improve energy usage of the data center.

For example, energy efficiency module 32 of edge services controller 28 may obtain energy usage data of a data center (502). The energy usage data may comprise a current energy usage ($E_C$) of the data center and a total energy usage ($E_T$) of the data center if the data center were to run at full capacity. As one example, edge services controller 28 may obtain energy usage data from edge service platform (ESP) agents (e.g., ESP agent 236 of FIG. 2) of computing devices (e.g., computing device 200 of FIG. 2) that specifies the current energy usage of computing devices within the data center. In some examples, edge services controller 28 may obtain total energy usage data from information provided by manufacturers of computing devices within the data center, such as manufacturer provided documentation specifying maximum energy capacity of the computing devices.

Energy efficiency module 32 of edge services controller 28 may determine, based on the energy usage data of the data center, an energy quotient ($E_Q$) of the data center that indicates a percentage of the total energy usage of the data center consumed by the current energy usage of the data center (504). Energy efficiency module 32 of edge services controller 28 may compare the energy quotient of the data center to a percentage of energy provided by one or more renewable energy sources to the data center, e.g., green energy percentage (g) (506).

Based on the comparison of the energy quotient ($E_Q$) with the green energy percentage (g) of the data center, energy efficiency module 32 of edge services controller 28 may specify a value of a green quotient of the data center ($GQ_{dc}$) that indicates whether the data center is energy efficient (508). For example, if the energy quotient ($E_Q$) of the data center is less than or equal to the green energy percentage (g) of the data center (e.g., $E_Q \leq g$), energy efficiency module 32 specifies a value (e.g., 100) for the green quotient of the data center ($GQ_{dc}$) that indicates the data center is energy efficient (e.g., "green"). If the energy quotient ($E_Q$) of the data center is greater than the green energy percentage (g) of the data center (e.g., $E_Q > g$), energy efficiency module 32 specifies a value (e.g., $101 - 101^{\left(\frac{E_Q - g}{100 - g}\right)}$) for the green quotient of the data center ($GQ_{dc}$) that indicates the data center is not energy efficient (e.g., "not green").

If the green quotient of the data center indicates the data center is not energy efficient ("NO" of step 510), energy efficiency module 32 may cause edge services controller 28 to invoke one or more actions to improve energy usage of the data center (512). For example, energy efficiency module 32 may, in response to determining the green quotient of the data center that indicates the data center is not green, cause edge services controller 28 to modify a network protocol implemented by devices within the data center to another network protocol that is more energy efficient (e.g., use less power), modify a tunneling protocol implemented in the underlay network of the data center to another tunneling protocol that is more energy efficient, automatically scale port speeds of high-speed interfaces of devices within the data center, reduce the number of duplicate and/or Equal-Cost Multi-Path (ECMP) paths used to provide high availability, modify an Equal Cost Multipath (ECMP) algorithm or a weighted ECMP (wECMP) algorithm to take into account the energy cost of the different paths (e.g., using target distance and/or hop count) when classifying packet flows to respective paths of the different paths, shut down one or more network devices (e.g., half) that are configured to implement high availability when high availability is disabled, proactively activate a cooling system of the data center prior to the temperature of the data center exceeding a configured temperature threshold, automatically scale the MTU size of packets, or other actions to improve the energy usage of the data center.

If the green quotient of the data center indicates the data center is energy efficient ("YES" of step 510), energy efficiency module 32 may restart the process (e.g., at step 502) to determine whether the data center is energy efficient or stop the process.

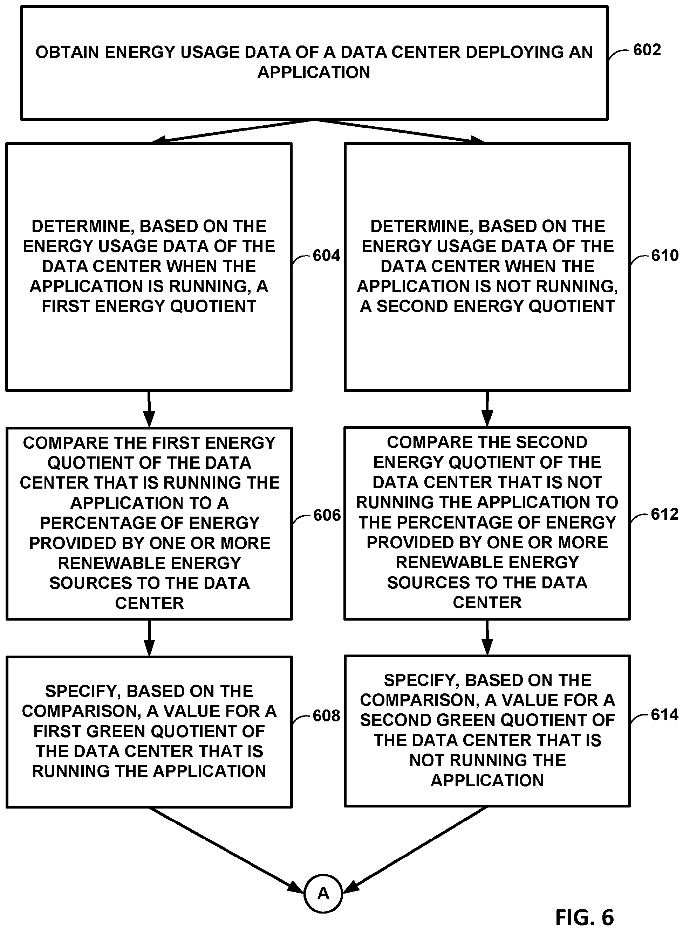

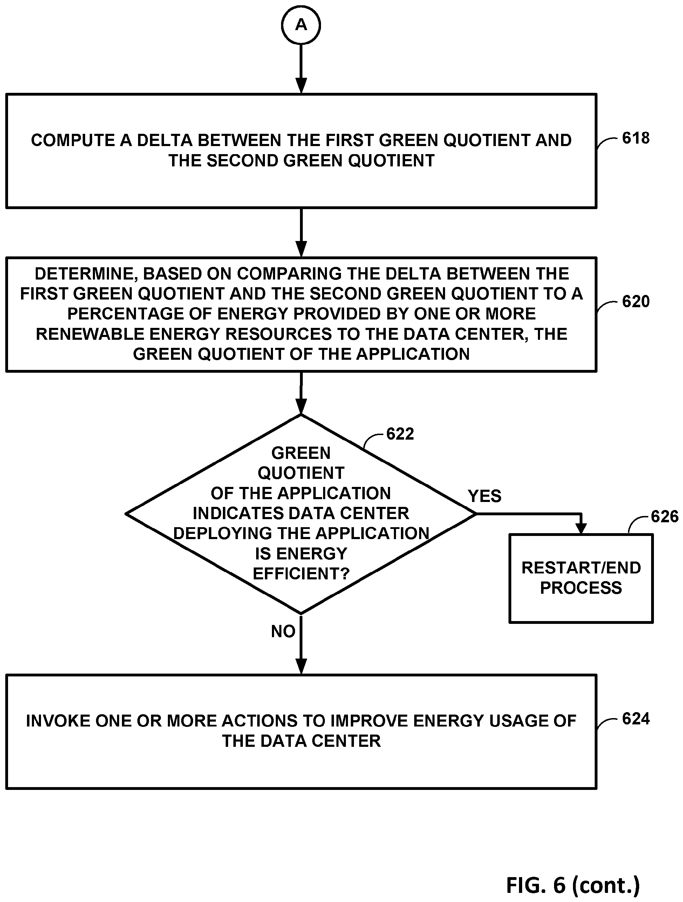

FIG. 6 is a flow chart of an example operation of edge services controller 28 to provide self-learning application workloads. In the example of FIG. 6, energy efficiency module 32 of edge services controller 28 may determine a green quotient of an application and invoke one or more actions based on the green quotient of the application to improve energy usage of the data center deploying the application.

For example, energy efficiency module 32 of edge services controller 28 may obtain energy usage data of a data center (602). The energy usage data of the data center may comprise a current energy usage $(E_C)$ of the data center and a total energy usage $(E_T)$ of the data center if the data center were to run at full capacity. As one example, edge services controller 28 may obtain energy usage data from edge service platform (ESP) agents (e.g., ESP agent 236 of FIG. 2) of computing devices (e.g., computing device 200 of FIG. 2) that specifies the current energy usage of computing devices within the data center. In some examples, edge services controller 28 may obtain total energy usage data from information provided by manufacturers of computing devices within the data center, such as manufacturer provided documentation specifying maximum energy capacity of the computing devices.

Energy efficiency module 32 of edge services controller 28 may determine, based on the energy usage data of the data center when the application is running, a first energy quotient $(E_Q)$ that indicates a percentage of the total energy usage of the data center consumed by the current energy usage of the data center that is running the application (604). Energy efficiency module 32 of edge services controller 28 may compare the first energy quotient of the data center that is not running the application to a percentage of energy provided by one or more renewable energy sources to the data center, e.g., green energy percentage (g) (606), and based on the comparison of the energy quotient $(E_Q)$ of the data center that is running the application with the green energy percentage (g) of the data center, energy efficiency module 32 of edge services controller 28 may specify a value for a first green quotient of the data center that is running the application $(GQ_{dc2})$ that indicates an energy usage of the data center when the application is running (608). For example, if the energy quotient $(E_Q)$ of the data center that not running the application is less than or equal to the green energy percentage (g) of the data center (e.g., $E_Q \le g$), energy efficiency module 32 specifies a value (e.g., 100) for the first green quotient of the data center that is running the application $(GQ_{dc2})$ that indicates the data center is energy efficient (e.g., "green"). If the energy quotient $(E_Q)$ of the data center is greater than the green energy percentage (g) of the data center (e.g., $E_Q > g$), energy efficiency module 32 specifies a value (e.g.,

$$101 - 101^{(\frac{E_Q - g}{100 - g})}$$

) for the green quotient of the data center that is running the application $(GQ_{dc2})$ that indicates the data center energy usage is not energy efficient (e.g., "not green"). In some examples, the first green quotient is computed from an average of green quotients of the data center when the application is running that were determined over a period of time.

Energy efficiency module 32 of edge services controller 28 may also determine, based on the energy usage data of the data center when the application is not running, a second energy quotient $(E_Q)$ of the data center that is running the application that indicates a percentage of the current energy usage of the data center that is not running the application to the total energy usage of the data center (610). Energy efficiency module 32 of edge services controller 28 may compare the energy quotient of the data center that is not running the application to a percentage of energy provided by one or more renewable energy sources to the data center, e.g., green energy percentage (g) (612), and based on the comparison of the energy quotient $(E_Q)$ of the data center that is not running the application with the green energy percentage (g) of the data center, energy efficiency module 32 of edge services controller 28 may specify a value for a second green quotient of the data center that is not running the application $(GQ_{dc1})$ that indicates the energy usage of the data center when the application is not running (614).

Energy efficiency module 32 of edge services controller 28 may compute a delta between the first green quotient $(GQ_{dc2})$ of the data center that is running the application and the second green quotient of the data center that is not running the application $(GQ_{dc1})$, to compute an energy usage of the application $(GQ_{\Delta})$ (618). For example, energy efficiency module 32 of edge services controller 28 may compute a difference of the first green quotient of the data center that is running the application and the second green quotient of the data center that is not running the application (e.g., $GQ_{dc2}$ - $GQ_{dc1}$). Energy efficiency module 32 of edge services controller 28 may compare the delta between the first green quotient and the second green quotient to a percentage of energy provided by one or more renewable energy sources to the data center (g), and based on the comparison, may determine the green quotient of the application $(GQ_{app})$ that specifies a value that indicates whether the data center deploying the application is energy efficient (620). For example, if the energy usage of the application $(GQ_{\Delta})$ is less than or equal to the green energy percentage (g) of the data center (e.g., $GQ_{\Delta} \le g$), energy efficiency module 32 specifies a value (e.g., 100) for the green quotient of the application $(GQ_{app})$ that indicates the data center deploying the application is energy efficient (e.g., "green"). If the energy usage of the application $(GQ_{\Delta})$ is greater than the percentage of energy provided by one or more renewable energy sources to the data center (e.g., $GQ_{\Delta} > g$), energy efficiency module 32 specifies a value (e.g., not 100) for the green quotient of the application $(GQ_{app})$ that indicates the data center deploying the application is not energy efficient.

If the green quotient of the application indicates the data center deploying the application is not energy efficient ("NO" of step 622), energy efficiency module 32 may cause edge services controller 28 to invoke one or more actions to improve energy usage of the data center (624). For example, energy efficiency module 32 may, in response to determining that the green quotient of the application is a value that indicates the data center 10 is not green (e.g., not 100), cause edge services controller 28 to automatically deploy application workloads, migrate application workloads to fewer servers and shutdown remaining unused servers, proactively activate the cooling system of the data center prior to the temperature of data center 10 exceeding a configured temperature threshold, disable the scaling of applications if the energy usage of the application exceeds a configured threshold, or other actions to improve the energy usage of the data center that is running the application.

If the green quotient of the application indicates the data center deploying the application is energy efficient ("YES" of step 622), energy efficiency module 32 may restart the process (e.g., at step 602) to determine whether the data center deploying the application is energy efficient or stop the process (628).

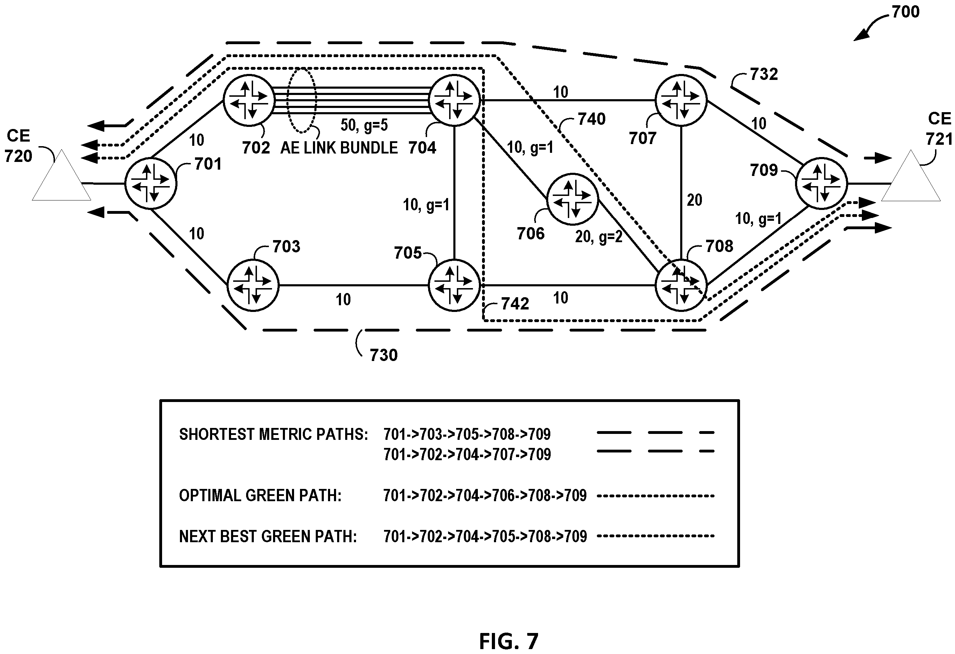

FIG. 7 is a block diagram of an example network system 700 in accordance with the techniques of the disclosure. More specifically, FIG. 7 depicts an example network system that computes a wECMP path with a green-BitCost Metric as described herein.

Equal cost multipath (ECMP) and weighted Equal cost multipaths (wECMP also known as, unequal cost multipath) are two common load balancing techniques applied in network traffic engineering. Realization of these features spans both control protocol and data path forwarding of a network node. Network control protocols like BGP, OSPF, ISIS, LDP etc., use path metric costs to arrive at the feasible multiple paths. Data path then load balances the active traffic streams using various packet hashing schemes. In the case of ECMP, traffic is equally distributed across multiple paths/links, while for wECMP, traffic is distributed unequally based on the weights/balances specified by the control protocol.

Lowering the energy footprint of a telecom network is a key step towards tackling worldwide climate change. This disclosure enhances load balancing mechanisms to enable an optimal energy efficient forwarding scheme in telecom networks.

## Weighted ECMP/Unequal cost load balancing

Network system 700 includes customer edge ("CE") devices 720 and 721, which are interconnected by network devices 701-709. In some examples, network devices 701-709 are examples of routers and switches 16, 18 of FIG. 1. As depicted in the example of FIG. 7, network devices 701-709 provide 4 multipaths between CE devices 720 and 721:

- Path 730 701→703→705→708→709 (path cost: 40)
- Path 732 701→702→704→707→709 (path cost: 80)
- Path 740 701→702→704→706→708→709 (path cost: 90)
- Path 742 701→702→704→705→708→709 (path cost: 100)

Conventionally, a network device not using the techniques of the disclosure may install a wECMP route that may result in approximate ratios of traffic distribution based on metric cost, which may result in a distribution of about (43%, 22%, 18%, 17%) across paths 730, 732, 740, and 742, respectively. Note here that the metric cost is derived from reference-bandwidth / interface-bandwidth.

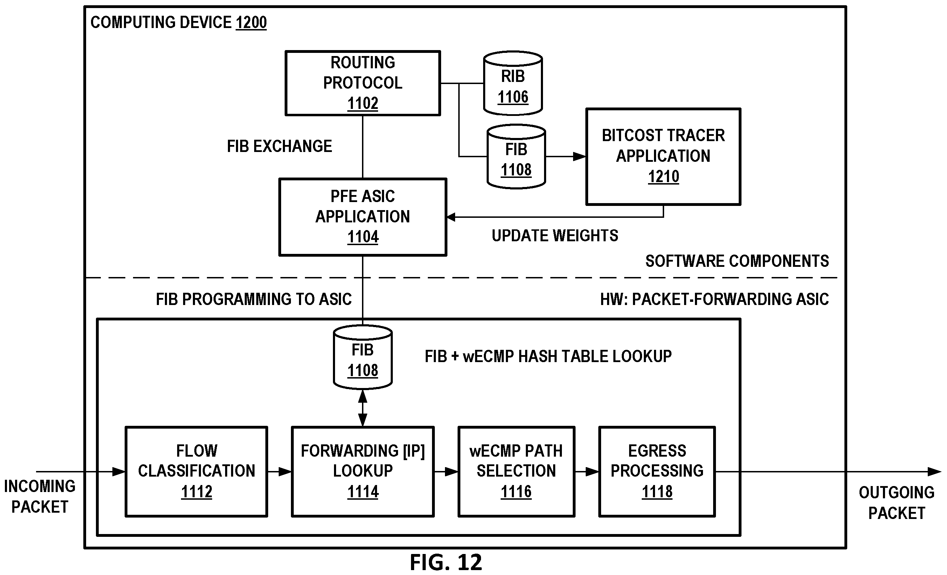

However, as depicted in the example of FIG. 7, while paths 730 and 732 may be a shortest path by conventional metrics, paths 740 and 742 may instead be more energy efficient. In accordance with the techniques of the disclosure (and as explained in more detail below with respect to FIG. 12), a network device incorporating the energy efficiency of each of paths may modify the wECMP cost of each path to account for an energy efficiency of each path. As explained in more detail below with respect to FIG. 12, when the energy efficiency of each path is taken into account, a more energy efficient distribution of network traffic, computing using the techniques of the disclosure, would be about (21%, 19%, 35.2%, 24%) across paths 730, 732, 740, and 742, respectively. Therefore, the techniques of the disclosure may enable network device to load balance a larger proportion of packets over paths 740 and 742 than are forwarded over paths 730, 732, due to paths 740 and 742 having less energy cost, despite that paths 730, 732 may have a smaller metric cost (e.g., shorter path length, etc.).

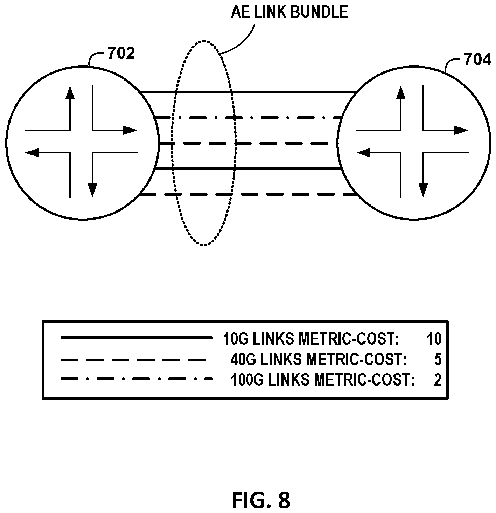

FIG. 8 is a block diagram of an example aggregated bundle of links in accordance with the techniques of the disclosure. Aggregated bundles of links may implement traffic ratios using the techniques described herein. For example, with respect to the example system of FIG. 7, some flows go over an aggregated bundle of Ethernet links between network devices 702 and 704. An aggregated bundle can also implement wECMP traffic ratios relative to the link bandwidth, as shown in FIG. 8. The aggregated bundle includes 5 links of unequal capacity {2×10G, 2x40G, 1x100G}. Therefore, according to conventional wECMP techniques, the two 10G links would have a metric cost of 10, the two 40G links would have a metric cost of 5, and the 100G link would have a metric cost of 2. Using conventional wECMP techniques, a network device not using the techniques of the disclosure would distribute traffic in the ratios of {2×1G: 10%, 2x40G: 40%, 1x100G: 50%}.

## Datapath forwarding.

Datapath handling for wECMP flows includes the following steps: classifying an incoming frame based on n-tuples; and constructing a hash key based on n-tuples and lookup the hash table. The hash table results provide appropriate distributed weight/balances to be used for in packet forwarding. While multiple algorithms/optimizations exist for the link selection on the weights/balances programmed by the control protocol, this disclosure does not concern this aspect. Rather the techniques described herein retain any existing mechanism for forwarding packets, but modify such weights/balances using the energy cost of each path.

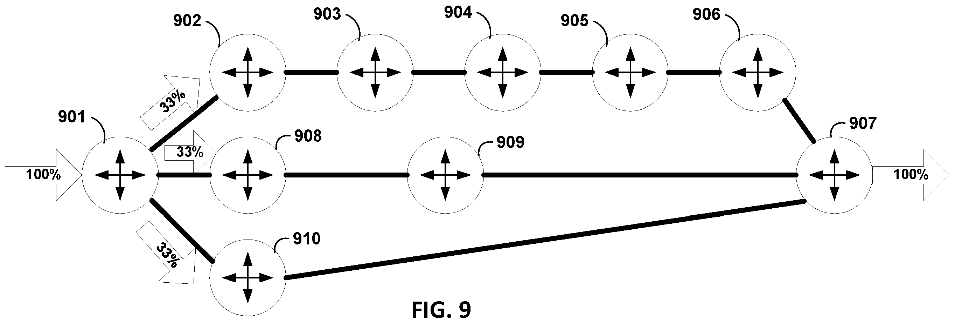

FIG. 9 is a block diagram of an example network system that performs routing of network traffic according to conventional ECMP techniques, i.e., for a system that does not employ the techniques of the disclosure. In current routing protocols, ECMP distributes the traffic equally between the participating links, as shown in FIG. 9. In FIG. 9, network device 901 distributes traffic between network devices 902, 908, and 910 equally. A typical router uses between 5 to 10KWatts of power. Therefore, because packets traversing through network device 902 additionally traverse network devices 903, 904, 905, and 906 to reach network device 907 (for a total of 5 network devices) versus packets traversing through network device 908 (which also traverse network device 909 for a total of 2 network devices) and versus packets traversing through network device 910 (which traverse only a single network device), packets traversing through network device 902 may consume more power when compared to other paths.

## Modifications to the traditional wECMP algorithm using hop count.

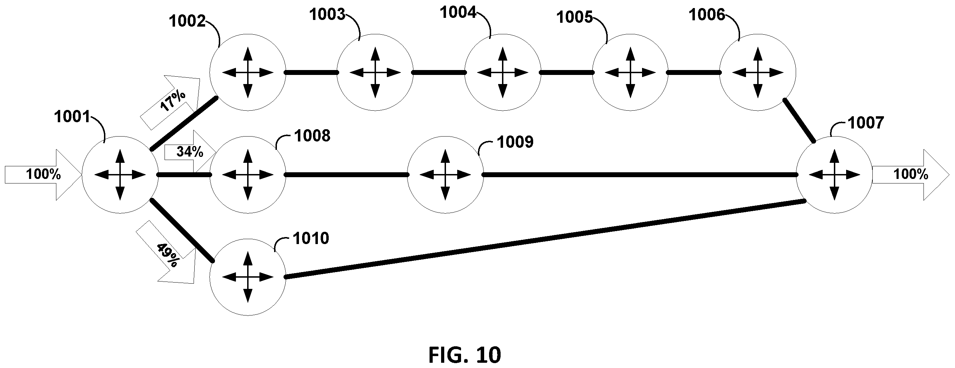

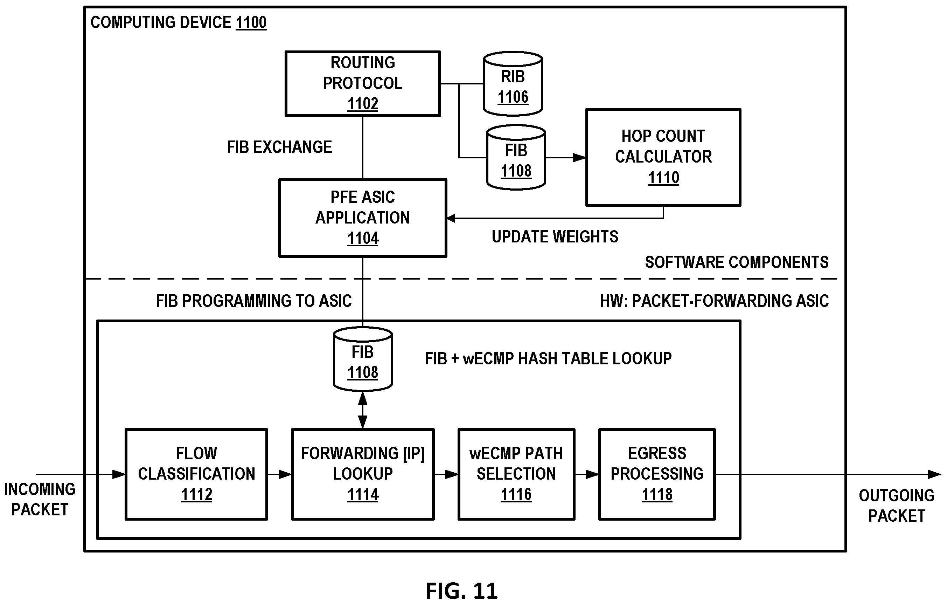

FIG. 10 is a block diagram of an example network system that performs routing of network traffic according to energy-aware ECMP routing using hop-count, in accordance with the techniques of the disclosure. For example, the example network system of FIG. 10 modifies the traditional wECMP traffic distribution algorithm to incorporate hop count to achieve more energy-efficient routing of packets, which results in the traffic distribution depicted in FIG. 10. While in the example of conventional ECMP techniques depicted in FIG. 9, traffic is forwarded to network devices 902, 908, and 910 in a (33%, 33%, 33%) even apportionment, a network device operating in accordance with the techniques of the disclosure may apportion network traffic to network devices 1002, 1008, and 1010 while taking into consideration the energy consumption of each path, resulting in an apportionment to network devices 1002, 1008, and 1010 of (17%, 34%, 49%). Additional description of how a network device may employ hop count to determine the energy consumption of each path and modify a wECMP cost of each path is described in more detail below with respect to FIG. 11.

FIG. 11 is a block diagram of an example computing device 1100 that performs routing of network traffic according to energy-aware ECMP routing using hop-count, in accordance with the techniques of the disclosure. In some examples, FIG. 11 depicts a computing device 1100 that implements a software model for overwriting or modifying wECMP weights/balances with an energy cost of each path determined based on a hop count of the corresponding path.

Computing device 1100 includes routing protocol 1102, routing information base (RIB) 1106, hop count calculator 1110, packet forwarding engine (also referred to herein as a "packet forwarding component") Application-specific Integrated Circuit (ASIC) application 1104, each of which may be software components stored by storage media (not depicted in FIG. 11) and executed by processing circuitry (not depicted in FIG. 11) of computing device 1100.

Routing protocol 1102 execute software instructions to implement one or more control plane networking protocols, such as routing protocols for exchanging routing information with other routing devices and for updating RIB 1106. RIB 1106 may describe a topology of the computer network in which computing device 1100 resides as well as routes through the shared trees in the computer network. RIB 1106 may further describe various routes within the computer network, and the appropriate next hops for each route, e.g., the neighboring routing devices along each of the routes. PFE ASIC application 1104 may provide interconnectivity between RIB 1106 and FIB 1108, such as to program various routes learned by RIB 1106 into FIB 1108.

Computing device 1100 further includes forwarding information base (FIB) 1108, flow classification 1112, forwarding (IP) lookup 1114, wECMP path selection 1116, and egress processing 1118, each of which may be part of or implemented by a hardware-based packet-forwarding ASIC. Flow classification 1112 receives an incoming packet and determines a classification of a packet flow associated with the incoming packet. Forwarding (IP) lookup 1114 performs a lookup, via FIB 1108, to obtain an IP address to which packets associated with the packet flow should be forwarded. In some examples, forwarding (IP) lookup 1114 may use the classification of the associated packet flow to obtain the IP address via FIB 1108. FIB 1108 stores forwarding data structures associating network destinations with next hops and outgoing interfaces. wECMP path selection 1116 performs path selection to determine one or more paths over which the incoming packet may be forwarded. In addition, wECMP path selection 1116 determines a cost of each path by applying wECMP techniques to the determined one or more paths. Egress processing 1118 performs egress processing of the incoming packet and forwards the packet to a next hop towards the destination of the packet.

In accordance with the techniques of the disclosure, and as described in more detail below, hop count calculator 1110 may determine an energy cost of each path of a plurality of paths based at least in part by determining a count of hops of each corresponding path. Hop count calculator 1110 may communicate with PFE ASIC application 1104 to modify a wECMP cost of each path, as determined by wECMP path selection 1116 and stored in FIB 1108, with the determined energy cost so as factor the energy cost of each path into the path selection performed by the packet forwarding ASIC hardware.

### Deriving hop count in a network

Traceroute is an operations tool which allows for discovering packet path and delays experienced across these paths. In some examples, hop count calculator 1110 may employ a modification of the traceroute tool to identify a hop count along each path in an ECMP scheme. As described herein, hop count calculator 1110 may use the hop count of each path as a weight in an wECMP scheme so as to factor the energy consumption of each path into the wECMP weighting scheme.

### Solution for a green Path selection

With respect to the example network system of FIG. 10, the green-BitCost path computed via a hop count of each path would be:

- Path1 1001→1002→1003→1004→1005→1006→ 1007 (Hop Count: 6, Weight = 17)
- Path2 1001→1008→1009→1007 (Hop Count: 3, Weight = 34)
- Path3 1001→1010→1007 (Hop Count: 2, Weight = 49)

By programming the new weights/balances to the ASIC hardware of the computing device 1100 of FIG. 11, the new traffic distribution is {17%, 34%, 49%} versus about {33%, 33%, 33%}, as computed using conventional ECMP techniques. In this example, due to the reprogramming of weights, computing device 1100, by implementing the techniques disclosed herein, may significantly improve the traffic pattern to choose an energy efficient link.

FIG. 12 is a block diagram of an example computing device 1200 that performs routing of network traffic according to energy-aware ECMP routing using green-BitCost, in accordance with the techniques of the disclosure. In some examples, FIG. 12 depicts a computing device that implements a software model for overwriting wECMP weights/balances using an energy cost of each path that is computed based on a green-BitCost of the corresponding path. In some examples, the green-Bit-Cost is based on a geographic distance of each path. In some examples, in the alternative to or in addition to the geographic distance, the green-BitCost is based on one or more factors including a Watt-per-bit cost of each path, a physical parameter of each path, and/or a device characteristic of one or more network devices implementing each path.

Computing device 1200 may operate in a substantially similar fashion to computing device 1100 of FIG. 11. Computing device 1200 includes routing protocol 1102, routing information base (RIB) 1106, bitcost tracer application 1210, packet forwarding engine (also referred to herein as a "packet forwarding component") Application-specific Integrated Circuit (ASIC) application 1104, each of which may be software components stored by storage media (not depicted in FIG. 11) and executed by processing circuitry (not depicted in FIG. 11) of computing device 1100.

Computing device 1200 further includes forwarding information base (FIB) 1108, flow classification 1112, forwarding (IP) lookup 1114, wECMP path selection 1116, and egress processing 1118, each of which may be part of or implemented by a hardware-based packet-forwarding ASIC.

In accordance with the techniques of the disclosure, and as described in more detail below, bitcost tracer application 1210 may determine an energy cost of each path of a plurality of paths based at least in part by determining a green-BitCost of each corresponding path. In some examples, in the alternative to or in addition to the geographic distance, the green-BitCost is based on one or more factors including a Watt-per-bit cost of each path, a physical parameter of each path, and/or a device characteristic of one or more network devices implementing each path. Bitcost tracer application 1210 may communicate with PFE ASIC application 1104 to modify a wECMP cost of each path, as determined by wECMP path selection 1116 and stored in FIB 1108, with the determined energy cost so as factor the energy cost of each path into the path selection performed by the packet forwarding ASIC hardware.

## Modifications to the traditional wECMP algorithm using green-BitCost

In this example, bitcost tracer application 1210 modifies the wECMP traffic distribution algorithm based on a new metric called green-BitCost. Once the green-BitCost metric is available, the multipath selection and distribution is controlled based on this metric. The disclosure describes techniques for deriving the green-Bit-Cost based on simple operation and management tools like traceroute/ping, and subsequently uses this derived information for improving the traffic distribution logic.

## Calculating the Green BitCost of a link under consideration

Energy consumption of link under consideration depends on many factors. It is typically a function of at least the physical parameters of the link as well as device characteristics of the network device (e.g., switch or router). Physical parameters include the distance between connecting node (dictating the laser power required to drive the signal), the speed of the link, or the optics type. Device characteristics may include the type of switch/router and its internal design, as well as components participating in the forwarding of the packet affect the energy consumption of the device, which include, for example, various ASIC devices like Forwarding ASIC, Fabric ASIC, Gearbox, etc. As a general rule of thumb, modern ASICs which are manufactured in the lower nanometer (nm) technology tend to be more energy efficient than a decade-old device. The physical parameters are a major factor contributing to the green-BitCost, and this implementation of the techniques of the disclosure address this aspect.

## Deriving green-BitCost of links in a network

Traceroute is an operations tool which allows for discovering packet path and delays experienced across these paths. In some examples, bitcost tracer application 1210 uses a modification of the traceroute tool to identify multipath and derive the path delays and geo-location of the network device under consideration. One such tool is nMap: Network mapper. Based on utility tools such as traceroute and ping, it is possible to identify the physical topology distance and the propagation delay.

The techniques of the disclosure use the abilities of such tools bundled into the "BitCost-Tracer" application, BitCost Tracer Application 1210, which gathers information required to derive the green-BitCost based on multiple paths that are being optimized. BitCost-Tracer application 1210 actively listens to FIB telemetry data produced by routing protocols. FIB telemetry data allows BitCost-Tracer application 1210 to learn multipaths being installed in the forwarding ASIC by the routing protocols.

## Solution for a green Path selection

In some examples, BitCost-Tracer application 1210 listens to active paths being programmed in the system. BitCost-Tracer application 1210 calculates the green-BitCost metric associated against the FIB database, using geo-location and delays calculated using traceroute protocol. BitCost-Tracer application 1210 updates the weights and pushes the new computed weights to the ASIC, either directly or via a broking application which interfaces with the ASIC.

Continuing the example shown in FIG. 7, the green-BitCost path would be:

- Path 730 $701{\rightarrow}703{\rightarrow}705{\rightarrow}708{\rightarrow}709$ (path cost: 40, green-BitCost metric = 31)
- Path 732 $701{\rightarrow}702{\rightarrow}704{\rightarrow}707{\rightarrow}709$ (path cost: 80, green-BitCost metric = 35)
- Path 740 $701{\rightarrow}702{\rightarrow}704{\rightarrow}706{\rightarrow}708{\rightarrow}709$ (path cost: 90, green-BitCost metric = 19)
- Path 742 $701{\rightarrow}702{\rightarrow}704{\rightarrow}705{\rightarrow}708{\rightarrow}709$ (path cost: 100, green-BitCost metric = 27)

By programming the new weights/balances to the ASIC hardware, the new traffic distribution will be {21%, 19%, 35.2%, 24%} versus about (43%, 22%, 18%, 17%) using conventional wECMP techniques. In this example, due to the reprogramming of weights by Bit-Cost-Tracer application 1210, the techniques described herein have significantly improved the traffic pattern to choose an energy efficient link. Where the path reservation is in place, the green-BitCost metric is capped by the maximum reserved bandwidth for that path. This approach can be similarly applied to ECMP paths as well.

In some examples, application of the green-BitCost metric can be controlled by network policies. As an example, while under non-peak load time conditions, the green-BitCost wECMP scheme may be applied, while in peak network utilization time, regular path-cost wECMP weights/balances may be applied instead. In non-peak load, an "ecoprofile" is applied using green-BitCost techniques described herein, while in peak load a "performance-profile" is applied using conventional ECMP or wECMP techniques.

## Aggregated Ethernet

A similar approach can be exploited over aggregated interfaces that have unequal interface speed and combined with adaptive load balancing. Here, the weights over the aggregated interfaces are adjusted based on green-BitCost metric. For example, a 400G short reach optics may consume anywhere between 13-20W while a 1G optics may consume 3W. With adaptive load balancing, when the traffic load is less, it is preferred to use the 400G optics path as the watt/bit is smallest.

## Modifications to this approach

Instead of on-the-box application like BitCost-Tracer application 1210 controlling the wECMP weights, in some examples, a centralized controller can push the new weights, which may further improve efficiency. A simple hop-count can also be a simple metric to arrive at the weights.

Further enhancements are possible to introduce software policies for application of green-BitCost weights. As an example, a policy which uses the green-BitCost weights during lean network usage can be used, while during peak network time, a policy that uses traditional weights based on path-cost can be applied.

## Advantages of the approaches described herein

The techniques of the disclosure provide significant advantages. For example, the techniques of the disclosure do not require changes to existing routing protocols to compute green-BitCost. Further, BitCost-Tracer application 1210 described herein can be installed on any network device, such as a router or switch, or a server in the cloud. Taking advantage of FIB telemetry and standardized Datapath programming models like SAI availability, BitCost-Tracer application 1210 described herein can program the ability to update the weights on devices of other vendors. This enables any service provider to optimize the network right away. Additionally, this method can be applied on a single-hop aggregated Ethernet interface or a multihop path.

The techniques of the disclosure describe a green-BitCost metric, which is a new proposed metric over conventional techniques. The green-BitCost metric may be applied to both single hop (like aggregated ethernet interface) and multihop paths. A system as described herein may derive green-BitCost from platform data, such as optics type - LR, ER etc., and Platform model. The green-BitCost settings may be configuration-driven. Additionally, the techniques of the disclosure provide a method to arrive at the green-BitCost based on existing network tools such as traceroute, ping, and/or geolocation data. Additionally, the techniques of the disclosure provide a method for overriding the ECMP and wECMP weights based on this energy efficient green quotient. Additionally, the techniques of the disclosure enable a network system to apply a green hashing scheme based on a network-wide attribute of "eco-mode" or "performance-mode."

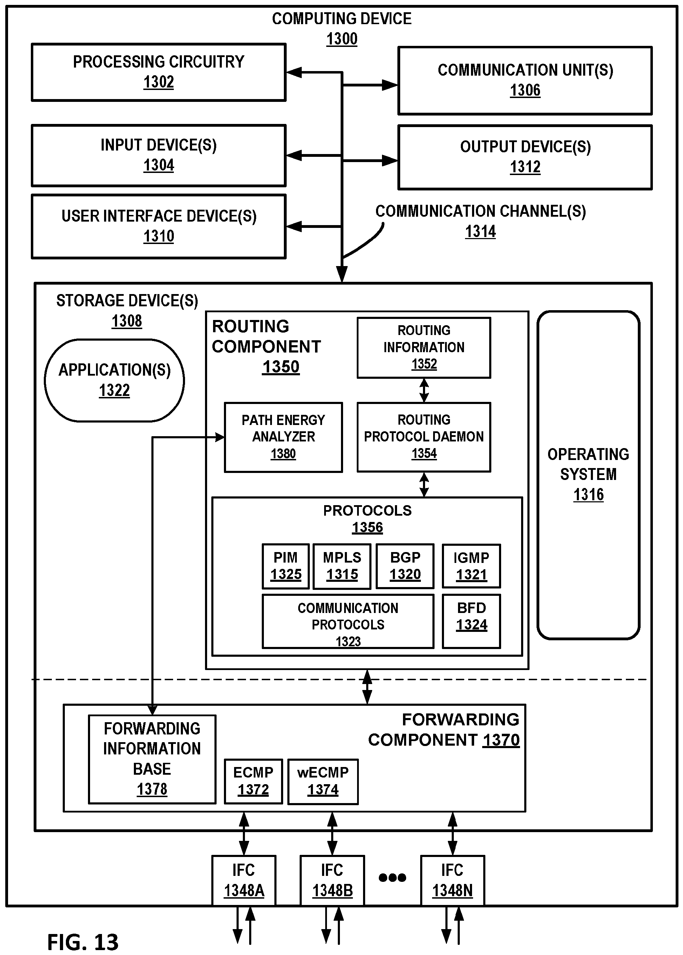

FIG. 13 is a block diagram of an example computing device 1300 in accordance with the techniques of the disclosure. In general, computing device 1300 may be an example implementation of one of network devices of FIG. 1, such as one or more of chassis switches 18, tor switches 16, or servers 12. Computing device 1300 includes processing circuitry 1302 for executing any one or more of applications 1322, routing component 1350, or any other computing device described herein. Other examples of computing device 1300 may be used in other instances to implement the techniques of the disclosure. While illustrated as a single device in the example of FIG. 13, in some examples, computing device 1300 may be implemented as a computing system distributed across multiple devices, e.g., such as in a distributed computing or cloud computing environment.

Although shown in FIG. 13 as a stand-alone computing device 1300 for purposes of example, a computing device that operates in accordance with the techniques of this disclosure may be any component or system that includes one or more processors or other suitable computing environment for executing software instructions and, for example, need not necessarily include one or more elements shown in FIG. 13 (e.g., communication units 1306; and in some examples, components such as storage device(s) 1308 may not be co-located or in the same chassis as other components). In some examples, computing device 1300 may be implemented as a virtualized network function (VNF). In some examples, one or more aspects of computing device 1300 can be run as one or more containers or as one or more applications within virtual machines of a Network Functions Virtualization (NFV) platform using, e.g., virtual input and output (VirtIO) and single root input/output virtualization (SR-IOV) network virtualization technologies, or on bare-metal servers. In some examples, computing device 1300 is a physical network device, such as a switch, router, gateway, or other device that sends and receives network traffic.

As shown in the example of FIG. 13, computing device 1300 includes processing circuitry 1302, one or more input device(s) 1304, one or more communication unit(s) 1306, one or more output device(s) 1312, one or more storage device(s) 1308, and one or more user interface (UI) device(s) 1310. Computing device 1300, in one example, further includes one or more application(s) 1322 and operating system 1316 that are executable by computing device 1300. Each of components 1302, 1304, 1306, 1308, 1310, and 1312 are coupled (physically, communicatively, and/or operatively) for inter-component communications. In some examples, communication channel(s) 1314 may include a system bus, a network connection, an interprocess communication data structure, or any other method for communicating data. As one example, components 1302, 1304, 1306, 1308, 1310, and 1312 may be coupled by one or more communication channels 1314.

Processing circuitry 1302, in one example, is configured to implement functionality and/or process instructions for execution within computing device 1300. In some examples, processing circuitry 1302 includes one or more hardware-based processors. For example, processing circuitry 1302 may be capable of processing instructions stored in storage device 1308. Examples of processing circuitry 1302 may include, any one or more of a microprocessor, a controller, a digital signal processor (DSP), an application specific integrated circuit (ASIC), a field-programmable gate array (FPGA), or equivalent discrete or integrated logic circuitry.

One or more storage device(s) 1308 may be configured to store information within computing device 1300 during operation. Storage device(s) 1308, in some examples, is described as a computer-readable storage medium. In some examples, storage device(s) 1308 include a temporary memory, meaning that a primary purpose of storage device 1308 is not long-term storage. Storage device(s) 1308, in some examples, include a volatile memory, meaning that storage device(s) 1308 does not maintain stored contents when the computer is turned off. Examples of volatile memories include random access memories (RAM), dynamic random access memories (DRAM), static random access memories (SRAM), and other forms of volatile memories. In some examples, storage device(s) 1308 stores program instructions for execution by processing circuitry 1302. Storage device(s) 1308, in one example, are used by software or applications running on computing device 1300 to temporarily store information during program execution.

Storage device(s) 1308, in some examples, also include one or more computer-readable storage media. Storage device(s) 1308 may be configured to store larger amounts of information than volatile memory. Storage device(s) 1308 may further be configured for long-term storage of information. In some examples, storage device(s) 1308 include non-volatile storage elements. Examples of such non-volatile storage elements include magnetic hard discs, optical discs, floppy discs, flash memories, or forms of electrically programmable memories (EPROM) or electrically erasable and programmable (EEPROM) memories.

Computing device 1300, in some examples, also includes one or more communication unit(s) 1306. Computing device 1300, in one example, utilizes communication unit(s) 1306 to communicate with external devices via one or more networks, such as one or more wired/wireless/mobile networks. Communication unit(s) 1306 may include a network interface, such as an Ethernet card, an optical transceiver, a radio frequency transceiver, or any other type of device that can send and receive information. Other examples of such network interfaces may include 3G/4G/5G and WiFi radios. In some examples, communication unit(s) 1306 may include a plurality of high-speed network interface cards. In some examples, computing device 1300 uses communication unit(s) 1306 to communicate with an external device. For example, in some examples, computing device 1300 uses communication unit(s) 1306 to communicate with one of network devices of FIG. 1, such as one or more of chassis switches 18, tor switches 16, or servers 12. In some examples, communication unit(s) 1306 include a set of interface cards 1348A-1348N (collectively, "IFCs 1348") (depicted separately for clarity).

Computing device 1300, in one example, also includes one or more user interface device(s) 1310. User interface devices 1310, in some examples, are configured to receive input from a user through tactile, audio, or video feedback. Examples of user interface devices(s) 1310 include a presence-sensitive display, a mouse, a keyboard, a voice responsive system, video camera, microphone or any other type of device for detecting a command from a user. In some examples, a presence-sensitive display includes a touch-sensitive screen. In some examples, a user such as an administrator of service provider networks 150 may enter configuration data for computing device 1300.

One or more output device(s) 1312 may also be included in computing device 1300. Output device(s) 1312, in some examples, is configured to provide output to a user using tactile, audio, or video stimuli. Output device(s) 1312, in one example, includes a presence-sensitive display, a sound card, a video graphics adapter card, or any other type of device for converting a signal into an appropriate form understandable to humans or machines. Additional examples of output device(s) 1312 include a speaker, a cathode ray tube (CRT) monitor, a liquid crystal display (LCD), or any other type of device that can generate intelligible output to a user.

Computing device 1300 may include operating system 1316. Operating system 1316, in some examples, controls the operation of components of computing device 1300. For example, operating system 1316, in one example, facilitates the communication of one or more applications 1322 with processing circuitry 1302, communication unit(s) 1306, storage device(s) 1308, input device(s) 1304, user interface device(s) 1310, and output device(s) 1312. Applications 1322 may also include program instructions and/or data that are executable by computing device 1300.

In some examples, processing circuitry 1302 executes routing component 1350, which provides control plane functionality, such as determining routes of received packets, and forwarding component 1370, which provides forwarding or data plane functionality for the computing device 1300 to send and receive traffic by a set of interface cards 1348 that typically have one or more physical network interface ports.

Routing component 1350 may communicate with other network devices, e.g., such as one or more of chassis switches 18, tor switches 16, or servers 12 of FIG. 1, to establish and maintain a computer network, such as computer network system 8 of FIG. 1, for transporting network traffic between one or more customer sites 11. Routing protocol daemon (RPD) 1354 of routing component 1350 may execute software instructions to implement one or more control plane networking protocols 1356. For example, protocols 1356 may include one or more routing protocols, such as IGMP 1321 and/or Border Gateway Protocol (BGP) 1320, for exchanging routing information with other routing devices and for updating routing information 1352, Multiprotocol Label Switching (MPLS) protocol 1315, PIM 1325, and other routing protocols. Protocols 1356 may further include one or more communication session protocols 1323, such as TCP, UDP, TLS, or ICMP. Protocols 1356 additionally includes BFD 1324.

Routing information 1352 may describe a topology of the computer network in which computing device 1300 resides, and may also include routes through the shared trees in the computer network. Routing information 1352 may describe various routes within the computer network, and the appropriate next hops for each route, e.g., the neighboring routing devices along each of the routes. Routing information 1352 may be programmed into dedicated forwarding chips, a series of tables, a complex database, a link list, a radix tree, a database, a flat file, or various other data structures.

Forwarding component 1370 performs packet switching and forwarding of incoming data packets for transmission over a network. Forwarding component 1370 includes forwarding information base (FIB) 1378 that stores forwarding data structures associating network destinations with next hops and outgoing interfaces. Although not shown in FIG. 13, forwarding component 1370 may comprise a central processing unit (CPU), memory and one or more programmable packet-forwarding application-specific integrated circuits (ASICs). In some examples, forwarding component 1370 may perform path selection when forwarding packets over a network. In some examples, forwarding component 1370 may apply path selection techniques, such as ECMP 1372 or wECMP 1374, to select one or more paths for forwarding packets over a network. In some examples, forwarding component 1370 may use ECMP 1372 or wECMP 1374 techniques to select one or more paths having similar performance metrics or "equal" costs so as to load balance network traffic across such one or more paths. In some examples, forwarding component 1370 may forward equal portions of network traffic across the one or more paths. In some examples, forwarding component 1370 may forward unequal portions of network traffic across the one or more paths.

In accordance with the techniques of the disclosure, routing component 1350 of computing device 1300 includes path energy analyzer 1380, which may assist forwarding component 1370 in taking into account the energy cost of each potential path when performing path selection. In some examples, path energy analyzer 1380 is an implementation of hop count calculator 1110 of FIG. 11. In some examples, path energy analyzer 1380 is an implementation of bitcost tracer application 1210 of FIG. 12.

For example, forwarding component 1370 receives, via IFCs 1348, packets of a plurality of packet flows for forwarding to another network device. In some examples, the other network device is one of chassis switches 18, tor switches 16, or servers 12 of FIG. 1. Forwarding component 1370 determines a plurality of paths over which the plurality of packet flows may be forwarded. In addition, forwarding component 1370 computes, via wECMP 1374, a wECMP cost of each path of the plurality of paths over which to forward packets of a plurality of packet flows.

Path energy analyzer 1380 determines an energy cost of each path of the plurality of paths over the packets of the plurality of packet flows may be forwarded. In some examples, path energy analyzer 1380 approximates or estimates the energy cost of each path based at least in part on a count of hops of the corresponding path. For example, assuming that each network device corresponding to a hop in a path uses approximately a same amount of energy, a path with a comparatively greater number of hops may therefore use more energy than a path with a comparatively fewer number of hops.

In some examples, path energy analyzer 1380 approximates or estimates the energy cost of each path based at least in part on a geographic distance of the corresponding path. For example, the techniques of the disclosure may assume that a path having a comparatively longer length may use more energy than a path with a comparatively shorter length due to transmission or rebroadcasting inefficiencies, a larger number of devices needed to form the path, inefficiencies due to conversion between different data types or formats, etc.

In some examples, path energy analyzer 1380 performs, for each path of the plurality of paths, a traceroute of the path to obtain a count of one or more hops of the path and an IP address of each hop of the one or more hops of the path. Path energy analyzer 1380 determines, from a corresponding IP address of each hop of the one or more hops of each path, a geographic location of the corresponding hop. Further, path energy analyzer 1380 determines, from the geographic location of each hop of the one or more hops of the path, a geographic distance of the path.

In some examples, path energy analyzer 1380 approximates or estimates the energy cost of each path based at least in part on a physical parameter of each path of the plurality of paths or a device characteristic of a network device implementing each path of the plurality of paths. For example, different physical parameters and/or attributes of a path may consume different amounts of energy. Path energy analyzer 1380 may determine an energy cost of a path based at least in part on a distance of a link of the path, a speed of the link of the path, or an optics type of the link of the path. In addition, different device characteristics of network devices forming the path may consume different amounts of energy. For example, newer network devices may typically (but not always) consume less power than older network devices, as more energy-efficient techniques are implemented. Path energy analyzer 1380 may determine an energy cost of a path based at least in part on a make or model of the network device or a type of one or more components of the network device (e.g., number of radios, antennae, interfaces, CPU model, number of CPUs or processor cores, amount of RAM, GPU model, CPU/RAM/GPU utilization, power supply, etc.). In some examples, path energy analyzer 1380 may query a database that stores information describing one or more physical parameters of each path and/or device characteristics of network devices forming each path to determine the energy cost of each path. In some examples, path energy analyzer 1380 may directly query a network device that forms part of a path to obtain the device characteristics of the network device.

In some scenarios, a first path may have a relatively higher energy cost and a second path may have a relatively lower energy cost. However, in this example, the first path may have a relatively higher bandwidth and the second path may have a relatively lower bandwidth. In such a situation, the first path may be more energy-efficient to use than the second path where the higher bandwidth of the first path offsets its higher energy consumption. In some examples, the techniques of the disclosure may account for the preferential treatment of a first path over a second path. For example, path energy analyzer 1380 may determine the energy cost of each path based at least in part on a Watt-per-bit cost of each path of the plurality of paths, wherein the Watt-per-bit cost is the energy cost of a path (in Watts) divided by a bandwidth (in bits) of the path. In this fashion, the techniques of the disclosure may account for the preferential treatment of a first path over a second path wherein the bit cost of the first path offsets the energy consumption of the first path.

Path energy analyzer 1380 modifies the wECMP cost of each path of the plurality of paths based at least in part on the energy cost of the corresponding path of the plurality of paths to obtain a modified wECMP cost of each path of the plurality of paths. Forwarding component 1370 load balances the plurality of packet flows over the plurality of paths in accordance with the modified wECMP cost. For example, forwarding component 1370 may allocate particular packet flows of the plurality of packet flows to be forwarded along different paths of the plurality of paths in proportion to the modified wECMP cost of each corresponding wECMP path. As another example, forwarding component 1370 may forward the packets of a particular packet flow along different paths of the plurality of paths in proportion to the modified wECMP cost of each corresponding wECMP path.

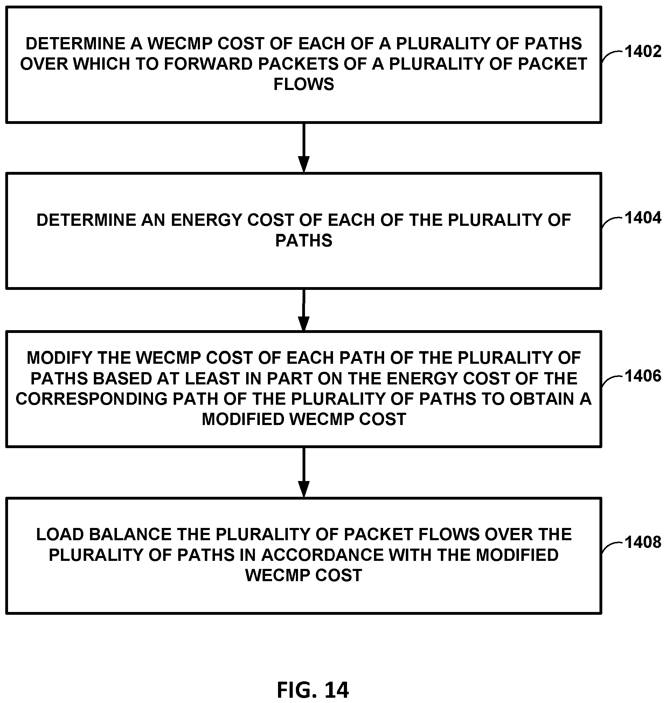

FIG. 14 is a flowchart illustrating an example operation in accordance with the techniques of the disclosure. More specifically, the operation of FIG. 14 depicts an example operation to perform path selection while taking into account the energy cost of each potential path. For convenience, the operation of FIG. 14 is described with respect to computing device 1300 of FIG. 13. However, the operation of FIG. 14 may be performed by other devices described herein, such as by one of network devices of FIG. 1, such as one or more of chassis switches 18, tor switches 16, or servers 12, in accordance with the techniques described herein.

Forwarding component 1370 receives, via IFCs 1348, packets of a plurality of packet flows for forwarding to another network device. In some examples, the other network device is one of chassis switches 18, tor switches 16, or servers 12 of FIG. 1. Forwarding component 1370 determines a plurality of paths over which the plurality of packet flows may be forwarded. In addition, forwarding component 1370 computes, via wECMP 1374, a wECMP cost of each path of the plurality of paths over which to forward packets of a plurality of packet flows (1402).

Path energy analyzer 1380 determines an energy cost of each path of the plurality of paths over the packets of the plurality of packet flows may be forwarded (1404). In some examples, path energy analyzer 1380 approximates or estimates the energy cost of each path based at least in part on a count of hops of the corresponding path. In some examples, path energy analyzer 1380 approximates or estimates the energy cost of each path based at least in part on a geographic distance of the corresponding path.

In some examples, path energy analyzer 1380 performs, for each path of the plurality of paths, a traceroute of the path to obtain a count of one or more hops of the path and an IP address of each hop of the one or more hops of the path. Path energy analyzer 1380 determines, from a corresponding IP address of each hop of the one or more hops of each path, a geographic location of the corresponding hop. Further, path energy analyzer 1380 determines, from the geographic location of each hop of the one or more hops of the path, a geographic distance of the path.

Path energy analyzer 1380 modifies the wECMP cost of each path of the plurality of paths based at least in part on the energy cost of the corresponding path of the plurality of paths to obtain a modified wECMP cost of each path of the plurality of paths (1406). Forwarding component 1370 load balances the plurality of packet flows over the plurality of paths in accordance with the modified wECMP cost (1408). For example, forwarding component 1370 may allocate particular packet flows of the plurality of packet flows to be forwarded along different paths of the plurality of paths in proportion to the modified wECMP cost of each corresponding wECMP path. As another example, forwarding component 1370 may forward the packets of a particular packet flow along different paths of the plurality of paths in proportion to the modified wECMP cost of each corresponding wECMP path.

The techniques described herein may be implemented in hardware, software, firmware, or any combination thereof. Various features described as modules, units or components may be implemented together in an integrated logic device or separately as discrete but interoperable logic devices or other hardware devices. In some cases, various features of electronic circuitry may be implemented as one or more integrated circuit devices, such as an integrated circuit chip or chipset.

If implemented in hardware, this disclosure may be directed to an apparatus such as a processor or an integrated circuit device, such as an integrated circuit chip or chipset. Alternatively, or additionally, if implemented in software or firmware, the techniques may be realized at least in part by a computer-readable medium comprising instructions that, when executed, cause a processor to perform one or more of the methods described above. For example, the computer-readable medium may store and/or provide such instructions for execution by a processor. A computer readable medium may be provided as a computer-readable data storage medium and/or a computer readable transmission medium. A computer-readable transmission medium (by which such instructions may be conveyed) may include carrier waves, transmission signals or the like. A computer-readable transmission medium may convey instructions between components of a single computer system and/or between plural separate computer systems.

A computer-readable medium may form part of a computer program product, which may include packaging materials. As noted above, a computer-readable medium may comprise a computer data storage medium such as random access memory (RAM), read-only memory (ROM), non-volatile random access memory (NVRAM), electrically erasable programmable read-only memory (EEPROM), Flash memory, magnetic or optical data storage media, and the like. In some examples, an article of manufacture may comprise one or more computer-readable storage media.

In some examples, a computer-readable storage media may comprise non-transitory media. The term "non-transitory" may indicate that the storage medium is not embodied in a carrier wave or a propagated signal. In certain examples, a non-transitory storage medium may store data that can, over time, change (e.g., in RAM or cache).

The code or instructions may be software and/or firmware executed by processing circuitry including one or more processors, such as one or more digital signal processors (DSPs), general purpose microprocessors, application-specific integrated circuits (ASICs), field-programmable gate arrays (FPGAs), or other equivalent integrated or discrete logic circuitry. Accordingly, the term "processor," as used herein may refer to any of the foregoing structure or any other structure suitable for implementation of the techniques described herein. In addition, in some aspects, functionality described in this disclosure may be provided within software modules or hardware modules.

Therefore, from one perspective, there have been described techniques for classifying packet flows to different paths of a computer network based at least in part on an energy cost of each of the different paths. In one example, a network device determines a weighted equal-cost multipath (wECMP) cost of each of different paths over which to forward packets. The different paths may include, for example, different interfaces of a network device, different links to which the network device is connected, or different links of an aggregated bundle of Ethernet links. The network device determines an energy cost of each of the paths. The network device modifies the wECMP cost of each path based at least in part on the energy cost of the path to obtain a modified wECMP cost. The network device load balances the packets over the paths in accordance with the modified wECMP cost.

Further examples are set out in the following numbered clauses.

Clause 1. A computing system comprising: storage media; and processing circuitry in communication with the storage media and configured to: classify a plurality of packet flows to a plurality of different paths of a computer network based at least in part on an energy cost of each path of the plurality of different paths.

Clause 2. The computing system of clause 1, wherein the processing circuitry is further configured to compute the energy cost of each path of the plurality of different paths based on a count of hops of each path of the plurality of different paths.

Clause 3. The computing system of clause 2, wherein the processing circuitry is further configured to determine the count of hops of each path of the plurality of different paths via traceroute.

Clause 4. The computing system of any of clauses 1 through 3, wherein the processing circuitry is further configured to compute the energy cost of each path of the plurality of different paths based on a green-BitCost of each path of the plurality of different paths.

Clause 5. The computing system of any of clauses 1 through 4, wherein the processing circuitry is further configured to compute the energy cost of each path of the plurality of different paths based on a physical parameter of each path of the plurality of different paths or a device characteristic of a network device implementing each path of the plurality of different paths.

Clause 6. The computing system of clause 5, wherein the physical parameter of each path of the plurality of different paths comprises a distance of a link of the path, a speed of the link of the path, or an optics type of the link of the path.

Clause 7. The computing system of any of clauses 5 through 6, wherein the device characteristic of the network device comprises a model of the network device or a type of one or more components of the network device.

Clause 8. The computing system of any of clauses 1 through 7, wherein the processing circuitry is further configured to compute the energy cost of each path of the plurality of different paths based on a physical topology distance, a propagation delay, or a geolocation of each path of the plurality of different paths.

Clause 9. The computing system of clause 8, wherein the processing circuitry is further configured to determine the physical topology distance, the propagation delay, or the geolocation of each path of the plurality of different paths via traceroute or ping.

Clause 10. The computing system of any of clauses 1 through 9, wherein the processing circuitry is further configured to compute the energy cost of each path of the plurality of different paths based on a Watt-per-bit cost of each path of the plurality of different paths.

Clause 11. The computing system of any of clauses 1 through 10, wherein the processing circuitry is further configured to learn each path of the plurality of different paths from a Forwarding Information Base (FIB) associated with the path.

Clause 12. The computing system of any of clauses 1 through 11, wherein the processing circuitry is further configured to limit the energy cost of each path based at least in part on a maximum reserved bandwidth of the path.

Clause 13. The computing system of any of clauses 1 through 12, wherein, to classify the plurality of packet flows to the plurality of different paths, the processing circuitry is configured to: in response to determining that the computer network is subject to a first utilization amount, classify the plurality of packet flows to the plurality of different paths based at least in part on the energy cost of each path of the plurality of different paths, and in response to determining that the computer network is subject to a second utilization amount, classify the plurality of packet flows to the plurality of different paths based at least in part on one of an Equal Cost Multipath (ECMP) algorithm or a weighted Equal Cost Multipath (wECMP) algorithm.

Clause 14. The computing system of clause 13, wherein the first utilization amount is an off-peak utilization amount of the computer network, and wherein the second utilization amount is a peak utilization amount of the computer network.

Clause 15. The computing system of any of clauses 1 through 14, wherein, to classify the plurality of packet flows to the plurality of different paths, the processing circuitry is configured to modify one of an Equal Cost Multipath (ECMP) algorithm or a weighted Equal Cost Multipath (wECMP) algorithm with the energy cost of each path of the plurality of different paths.

Clause 16. The computing system of any of clauses 1 through 15, wherein the plurality of different paths comprise a plurality of different interfaces of a network device.

Clause 17. The computing system of any of clauses 1 through 15, wherein the plurality of different paths comprise a plurality of links to a plurality of network devices.

Clause 18. The computing system of any of clauses 1 through 15, wherein the plurality of different paths comprise an aggregated bundle of Ethernet links.

Clause 19. The computing system of any of clauses 1 through 18, wherein the computing system comprises a network device, wherein, to classify the plurality of packet flows to the plurality of different paths, the processing circuitry of the network device is configured to classify a first packet flow of the plurality of packet flows to a first path of the plurality of different paths, and wherein the processing circuitry of the network device is further configured to: receive a packet of the first packet flow; and forward the packet along the first path.

Clause 20. The computing system of any of clauses 1 through 18, wherein the computing system comprises a network controller for a plurality of network devices, wherein, to classify the plurality of packet flows to the plurality of different paths, the processing circuitry of the network controller is configured to classify a first packet flow of the plurality of packet flows to a first path of the plurality of different paths, and wherein the processing circuitry of the network controller is further configured to: install a route for the first packet flow in a first network device of the plurality of network devices, the route configured to cause the first network device to forward packets of the first packet flow along the first path.

Clause 21. A method as performed by the computing system of any of clauses 1 through 20.

Clause 22. Computer-readable media comprising instructions that, when executed, are configured to cause processing circuitry to implement the computing system of any of clauses 1 through 20.

## Claims

1. A network device comprising:
   processing circuitry in communication with storage media and configured to:

   determine a weighted equal-cost multipath, wECMP, cost of each of a plurality of paths over which to forward packets of a plurality of packet flows;
   determine an energy cost of each of the plurality of paths;
   modify the wECMP cost of each path of the plurality of paths based at least in part on the energy cost of the corresponding path of the plurality of paths to obtain a modified wECMP cost; and

load balance the plurality of packets over the plurality of paths in accordance with the modified wECMP cost.

2. The network device of claim 1, wherein the processing circuitry is configured to determine the energy cost of each path of the plurality of paths based at least in part on a count of hops of each path of the plurality of paths.

3. The network device of claim 2, wherein the processing circuitry is configured to perform a traceroute of each path of the plurality of paths to obtain the count of hops of each path of the plurality of paths.

4. The network device of any of claims 1-3, wherein the processing circuitry is configured to determine the energy cost of each path of the plurality of paths based at least in part on a geographic distance of each path of the plurality of paths.

5. The network device of claim 4, wherein, for each path of the plurality of paths, the processing circuitry is configured to:

perform a traceroute of the path to obtain an Internet Protocol, IP, address of each hop of one or more hops of the path;
determine, from the IP address of each hop of the one or more hops of the path, a geographic location of each hop of the one or more hops of the path; and
determine the geographic distance of the path based at least in part on the geographic location of each hop of the one or more hops of the path.

6. The network device of any of claims 1-5, wherein the processing circuitry is configured to determine the energy cost of each path of the plurality of paths based at least in part on a Watt-per-bit cost of each path of the plurality of paths.

7. The network device of any of claims 1-6, wherein the processing circuitry is configured to determine the energy cost of each path of the plurality of paths based at least in part on a physical parameter of each path of the plurality of paths or a device characteristic of a network device implementing each path of the plurality of paths.

8. The network device of claim 7, wherein the physical parameter of each path of the plurality of paths comprises a distance of a link of the path, a speed of the link of the path, or an optics type of the link of the path.

9. The network device of any of claims 7-8, wherein the device characteristic of the network device comprises a model of the network device or a type of one or more components of the network device.

10. The network device of any of claims 1-9,

wherein the plurality of paths comprise a first path and a second path,
wherein a length of the first path is shorter than a length of the second path,
wherein an energy cost of the second path is less than an energy cost of the first path, and
wherein to load balance the plurality of packets over the plurality of paths in accordance with the modified wECMP cost, the processing circuitry is configured to forward a larger proportion of the plurality of packets over the second path than over the first path.

11. A method comprising:

determining, by a network device, a weighted equal-cost multipath, wECMP, cost of each of a plurality of paths over which to forward packets of a plurality of packet flows;
determining, by the network device, an energy cost of each of the plurality of paths;
modifying, by the network device, the wECMP cost of each path of the plurality of paths based at least in part on the energy cost of the corresponding path of the plurality of paths to obtain a modified wECMP cost; and
load balancing, by the network device, the plurality of packets over the plurality of paths in accordance with the modified wECMP cost.

12. The method of claim 11, further comprising steps corresponding to the functionality of any of claims 1-10.

13. Computer-readable medium encoded with instructions which, when executed by one or more programmable processors, cause one or more programmable processors to become configured as the network device of any of claims 1-10 or to become configured to carry out the method of any of claims 11-12.

FIG. 1

FIG. 2

**FIG. 3**

EP 4 521 704 A1

FIG. 4

```
┌─────────────────────────────────────┐
│  OBTAIN ENERGY USAGE DATA OF A       │──502
│  DATA CENTER                         │
└─────────────────────────────────────┘
                  │
                  ▼
┌─────────────────────────────────────┐
│  DETERMINE, BASED ON THE ENERGY      │──504
│  USAGE DATA OF THE DATA CENTER, AN   │
│  ENERGY QUOTIENT                     │
└─────────────────────────────────────┘
                  │
                  ▼
┌─────────────────────────────────────┐
│  COMPARE THE ENERGY QUOTIENT OF      │
│  THE DATA CENTER TO A PERCENTAGE     │
│  OF ENERGY PROVIDED BY ONE OR        │──506
│  MORE RENEWABLE ENERGY SOURCES       │
│  TO THE DATA CENTER                  │
└─────────────────────────────────────┘
                  │
                  ▼
┌─────────────────────────────────────┐
│  SPECIFY, BASED ON THE COMPARISON,   │
│  A VALUE OF A GREEN QUOTIENT OF THE  │
│  DATA CENTER THAT INDICATES          │──508
│  WHETHER THE DATA CENTER IS          │
│  ENERGY EFFICIENT                    │
└─────────────────────────────────────┘
                  │
                  ▼
              ◇ 510
           GREEN
           QUOTIENT
YES ──────INDICATES DATA
           CENTER IS ENERGY
           EFFICIENT?
                  │
                 NO
                  ▼
┌─────────────────────────────────────┐
│  INVOKE AN ACTION TO IMPROVE         │──512
│  ENERGY USAGE OF THE DATA CENTER     │
└─────────────────────────────────────┘
```

FIG. 5A

OBTAIN ENERGY USAGE DATA OF A DATA CENTER DEPLOYING AN APPLICATION — 602

DETERMINE, BASED ON THE ENERGY USAGE DATA OF THE DATA CENTER WHEN THE APPLICATION IS RUNNING, A FIRST ENERGY QUOTIENT — 604

DETERMINE, BASED ON THE ENERGY USAGE DATA OF THE DATA CENTER WHEN THE APPLICATION IS NOT RUNNING, A SECOND ENERGY QUOTIENT — 610

COMPARE THE FIRST ENERGY QUOTIENT OF THE DATA CENTER THAT IS RUNNING THE APPLICATION TO A PERCENTAGE OF ENERGY PROVIDED BY ONE OR MORE RENEWABLE ENERGY SOURCES TO THE DATA CENTER — 606

COMPARE THE SECOND ENERGY QUOTIENT OF THE DATA CENTER THAT IS NOT RUNNING THE APPLICATION TO THE PERCENTAGE OF ENERGY PROVIDED BY ONE OR MORE RENEWABLE ENERGY SOURCES TO THE DATA CENTER — 612

SPECIFY, BASED ON THE COMPARISON, A VALUE FOR A FIRST GREEN QUOTIENT OF THE DATA CENTER THAT IS RUNNING THE APPLICATION — 608

SPECIFY, BASED ON THE COMPARISON, A VALUE FOR A SECOND GREEN QUOTIENT OF THE DATA CENTER THAT IS NOT RUNNING THE APPLICATION — 614

A

FIG. 6

A

COMPUTE A DELTA BETWEEN THE FIRST GREEN QUOTIENT AND THE SECOND GREEN QUOTIENT — 618

DETERMINE, BASED ON COMPARING THE DELTA BETWEEN THE FIRST GREEN QUOTIENT AND THE SECOND GREEN QUOTIENT TO A PERCENTAGE OF ENERGY PROVIDED BY ONE OR MORE RENEWABLE ENERGY RESOURCES TO THE DATA CENTER, THE GREEN QUOTIENT OF THE APPLICATION — 620

— 622
GREEN QUOTIENT OF THE APPLICATION INDICATES DATA CENTER DEPLOYING THE APPLICATION IS ENERGY EFFICIENT?

YES → RESTART/END PROCESS — 626

NO

INVOKE ONE OR MORE ACTIONS TO IMPROVE ENERGY USAGE OF THE DATA CENTER — 624

FIG. 6 (cont.)

| SHORTEST METRIC PATHS: | 701->703->705->708->709 | — — — |
| | 701->702->704->707->709 | — — — |
| OPTIMAL GREEN PATH: | 701->702->704->706->708->709 | ................ |
| NEXT BEST GREEN PATH: | 701->702->704->705->708->709 | ................ |

**FIG. 7**

AE LINK BUNDLE

702

704

| | 10G LINKS METRIC-COST: | 10 |
| --- | --- | --- |
| | 40G LINKS METRIC-COST: | 5 |
| | 100G LINKS METRIC-COST: | 2 |

**FIG. 8**

FIG. 9

**FIG. 10**

**FIG. 11**

**FIG. 12**

COMPUTING DEVICE 1200

ROUTING PROTOCOL 1102

RIB 1106

FIB 1108

BITCOST TRACER APPLICATION 1210

FIB EXCHANGE

PFE ASIC APPLICATION 1104

UPDATE WEIGHTS

SOFTWARE COMPONENTS

FIB PROGRAMMING TO ASIC

HW: PACKET-FORWARDING ASIC

FIB 1108

FIB + wECMP HASH TABLE LOOKUP

INCOMING PACKET

FLOW CLASSIFICATION 1112

FORWARDING [IP] LOOKUP 1114

wECMP PATH SELECTION 1116

EGRESS PROCESSING 1118

OUTGOING PACKET

EP 4 521 704 A1

**FIG. 13**

DETERMINE A WECMP COST OF EACH OF A PLURALITY OF PATHS OVER WHICH TO FORWARD PACKETS OF A PLURALITY OF PACKET FLOWS ⌐1402

DETERMINE AN ENERGY COST OF EACH OF THE PLURALITY OF PATHS ⌐1404

MODIFY THE WECMP COST OF EACH PATH OF THE PLURALITY OF PATHS BASED AT LEAST IN PART ON THE ENERGY COST OF THE CORRESPONDING PATH OF THE PLURALITY OF PATHS TO OBTAIN A MODIFIED WECMP COST ⌐1406

LOAD BALANCE THE PLURALITY OF PACKET FLOWS OVER THE PLURALITY OF PATHS IN ACCORDANCE WITH THE MODIFIED WECMP COST ⌐1408

FIG. 14

Europäisches
Patentamt

European
Patent Office

Office européen
des brevets

# EUROPEAN SEARCH REPORT

Application Number

EP 24 19 9542

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MAALOUL RIHAB ET AL: "Equal Cost Multiple Path Energy-Aware Routing in Carrier-Ethernet Networks with Bundled Links", 2017 IEEE/ACS 14TH INTERNATIONAL CONFERENCE ON COMPUTER SYSTEMS AND APPLICATIONS (AICCSA), IEEE, 30 October 2017 (2017-10-30), pages 1101-1108, XP033330009, DOI: 10.1109/AICCSA.2017.121 [retrieved on 2018-03-07] | 1-3,6-13 | INV. H04L45/122 H04L45/12 H04L45/24 H04L47/125 |
| Y | * Section III. Green ECMP Routing Problem; page 1102 - page 1104 * * Section IV Heuristic Algorithms; page 1104 - page 1106 * ----- | 4,5 | |
| X | US 2013/286846 A1 (ATLAS ALIA KARIN [US] ET AL) 31 October 2013 (2013-10-31) | 1,2,7,8, 10-13 | |
| Y | * paragraph [0007] * * paragraph [0010] - paragraph [0011] * * paragraph [0024] * * paragraph [0037] - paragraph [0038] * * paragraph [0056] * * paragraph [0059] - paragraph [0060] * * paragraph [0065] * * paragraph [0068] - paragraph [0069] * * paragraph [0079] * * paragraph [0089] - paragraph [0092] * * paragraph [0103] - paragraph [0106] * * paragraph [0114] - paragraph [0119] * ----- | 4,5 | TECHNICAL FIELDS SEARCHED (IPC) H04L |
| Y | US 2018/278514 A1 (CHADHA ANKIT [US]) 27 September 2018 (2018-09-27) * paragraph [0027] * * paragraph [0079] - paragraph [0081] * ----- | 4,5 | |

-/--

The present search report has been drawn up for all claims

| Place of search | Date of completion of the search | Examiner |
|---|---|---|
| The Hague | 13 January 2025 | Beker, Sergio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 521 704 A1**

Europäisches
Patentamt

European
Patent Office

Office européen
des brevets

# EUROPEAN SEARCH REPORT

Application Number

EP 24 19 9542

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JUNJIE ZHANG ET AL: "Optimizing Network Performance Using Weighted Multipath Routing", COMPUTER COMMUNICATIONS AND NETWORKS (ICCCN), 2012 21ST INTERNATIONAL CONFERENCE ON, IEEE, 30 July 2012 (2012-07-30), pages 1-7, XP032229718, DOI: 10.1109/ICCCN.2012.6289274 ISBN: 978-1-4673-1543-2 * the whole document * | 1-13 | |

-----

TECHNICAL FIELDS
SEARCHED      (IPC)

The present search report has been drawn up for all claims

| Place of search | Date of completion of the search | Examiner |
|---|---|---|
| The Hague | 13 January 2025 | Beker, Sergio |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 19 9542

This annex lists the patent family members relating to the patent documents cited in the above-mentioned European search report.
The members are as contained in the European Patent Office EDP file on
The European Patent Office is in no way liable for these particulars which are merely given for the purpose of information.

13-01-2025

| Patent document cited in search report | | Publication date | Patent family member(s) | | Publication date |
|---|---|---|---|---|---|
| US 2013286846 | A1 | 31-10-2013 | CN | 103379042 A | 30-10-2013 |
| | | | EP | 2658192 A1 | 30-10-2013 |
| | | | EP | 3073684 A1 | 28-09-2016 |
| | | | US | 2013286846 A1 | 31-10-2013 |
| US 2018278514 | A1 | 27-09-2018 | CN | 108667681 A | 16-10-2018 |
| | | | EP | 3382954 A1 | 03-10-2018 |
| | | | US | 2018278514 A1 | 27-09-2018 |
| | | | US | 2022407800 A1 | 22-12-2022 |

EPO FORM P0459

For more details about this annex : see Official Journal of the European Patent Office, No. 12/82

**EP 4 521 704 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 82338424
- IN 202341060922
- US 2013044378 W
- US 22650914